# EUROPEAN PATENT SPECIFICATION

(11) **EP 3 193 333 B1**
(45) Date of publication and mention of the grant of the patent: **23.12.2020**
(21) Application number: 15839201.9
(22) Date of filing: 24.07.2015
(51) Int. Cl.: G11B 20/10, G11B 20/12, G11B 27/10, H04N 5/85, H04N 5/91, H04N 5/93, G11B 27/034, G11B 27/11

(54) **INFORMATION PROCESSING DEVICE, INFORMATION RECORDING MEDIUM, INFORMATION PROCESSING METHOD, AND PROGRAM**
INFORMATIONSVERARBEITUNGSVORRICHTUNG, INFORMATIONSAUFZEICHNUNGSMEDIUM, INFORMATIONSVERARBEITUNGSVERFAHREN UND PROGRAMM
DISPOSITIF DE TRAITEMENT D'INFORMATIONS, SUPPORT D'ENREGISTREMENT D'INFORMATIONS, PROCÉDÉ DE TRAITEMENT D'INFORMATIONS, ET PROGRAMME

(30) Priority: 08.09.2014 JP 2014181977; 21.10.2014 JP 2014214199
(43) Date of publication of application: 19.07.2017
(73) Proprietor: Sony Corporation, Tokyo 108-0075 (JP)
(72) Inventor: UCHIMURA, Kouichi, Tokyo 108-0075 (JP); TAKAHASHI, Ryohei, Tokyo 108-0075 (JP)
(74) Representative: Witte, Weller & Partner Patentanwälte mbB
(86) International application number: PCT/JP2015/071081
(87) International publication number: WO 2016/039025

(56) References cited:
- EP-A1- 3 163 890
- WO-A1-2009/157198
- WO-A1-2012/172460
- WO-A1-2012/172460
- WO-A1-2013/046095
- JP-A- 2007 520 844
- JP-A- 2011 023 071

## Description

### TECHNICAL FIELD

The present disclosure relates to an information processing apparatus, an information recording medium, and an information processing method, and a program. Further, in more detail, the present disclosure relates to an information processing apparatus, an information recording medium, and an information processing method, and a program that enable execution of reproduction processing and the like according to a data type from a medium such as a disk on which various data having different coding types, resolution, use color gamut, and the like are recorded.

### BACKGROUND ART

As information recording media (media) on which various types of content such as movies and music are recorded, digital versatile discs (DVDs) and Blu-ray (registered trademark) discs (BDs) are often used.

On a BD-ROM as a medium on which content such as a movie is recorded in advance, data of audio, subtitles, and the like are recorded with a high definition (HD) video that is a high-quality video, for example.

Many of the current BD-ROMs are recorded with the HD video, a so-called high-vision compatible 2K video. From now, an increase in media on which a 4K video that is an ultra high definition video (UHD video) is recorded is expected as the quality is improved.

Note that data recording and reproduction processing using a BD, and the 4K video are described in Patent Document 1 (Japanese Patent Application Laid-Open No. 2011-023071) and the like.

Currently, standardization of data recording types of the ultra high definition video (UHD video) on the BD have been in progress by the Blu-ray (registered trademark) disc association (BDA) as a standardization formulation organization.

The BDA has been formulating the standardization in consideration of not only compatibility to the 4K video, but also an output of a video and a subtitle to which a high dynamic range (HDR) video is applied, where the color gamut and the contrast ratio of the video and the subtitle to be output on a display are expanded.

The HDR has wider expressible color gamut and a larger contrast ratio be settable than standard dynamic range (SDR) videos that are widely used on current 2K compatible displays, and can express videos and subtitles close to reality seen by the naked eye.

However, currently, many of the displays of typically used televisions and the like can output only the SDR videos, and a few displays can output the HDR videos.

From now, displays that can output not only the 4K videos but also the HDR videos are expected to become popular over times.

The information recording media (media) such as the BDs on which HDR video content is recorded are expected to be on sale in advance of popularization of the displays.

Therefore, reproduction of the media on which HDR compatible videos and subtitle content are recorded on HDR incompatible displays needs to be taken into account.

For example, in a case of outputting the HDR content including the HDR compatible videos and subtitles recorded on a disk on the HDR incompatible display that can output only the SDR data, a disk reproducing device needs to perform some processing such as converting the HDR data into the SDR data and outputting the SDR data, or performing message display notifying that the disk stored content is the HDR data and a normal output cannot be performed on the HDR incompatible display.

To handle such processing, the reproducing device needs to recognize the type of data stored on the information recording medium (medium) and execute processing according to the recognized data type before reproduction of the content from the information recording medium (medium) such as the BD on which the HDR content is recorded. Patent Document 2 discloses a device for processing video information. The device has an input unit for receiving the video information having low dynamic range [LDR] video data and/or high dynamic range [HDR] video data, and a video processor for generating a display signal for display in a LDR display mode or HDR display mode.

### CITATION LIST

### PATENT DOCUMENT

Patent Document 1: Japanese Patent Application Laid-Open No. 2011-023071
Patent Document 2: WO 2012/172460 A1. This document shows a BD-ROM player supporting also HDR subtitles and menus. A display capability is determined, and the reproduction is adapted accordingly.

### SUMMARY OF THE INVENTION

### PROBLEMS TO BE SOLVED BY THE INVENTION

An objective of the present disclosure is to provide an information processing apparatus, an information recording medium, and an information processing method, and a program that enables a reproducing device to confirm a type of media record data before the start of content reproduction and perform processing according to a confirmation result, the reproducing device performing data reproduction from an information recording medium (medium) such as a BD on which various types of data such as HDR compatible data and SDR compatible data are recorded.

### SOLUTIONS TO PROBLEMS

The invention is defined in the appended claims.

A first aspect of the present disclosure lies in an information processing apparatus including:
a data processing unit configured to execute reproduction processing of disk recorded data, wherein
the data processing unit
acquires a reproduction control information file corresponding to reproduction data recorded on a disk,
determines whether high dynamic range (HDR) graphics data configured from HDR data is recorded on the disk on the basis of record data of the acquired reproduction control information file, and
and further acquires attribute information of the HDR graphics data from reproduction control information, and executes control of output data for the display device according to the acquired information in a case where the HDR graphics data is recorded on the disk.

Moreover, a second aspect of the present disclosure lies in an information processing apparatus including:
a data processing unit configured to execute processing of generating record data to a medium, wherein
the data processing unit generates,
as a reproduction control information file corresponding to reproduction data,
identification data indicating whether HDR graphics data configured from high dynamic range (HDR) data is recorded as data to be controlled based on the reproduction control information file, and
a reproduction control information file in which attribute information of the HDR graphics data is recorded in a case where the HDR graphics data is included as the data to be controlled based on the reproduction control information file.

Moreover, a third aspect of the present disclosure lies in an information recording medium on which a reproduction data storage file and a reproduction control information file corresponding to the reproduction data storage file are recorded,
the reproduction control information file including
identification data indicating whether high dynamic range (HDR) graphics data configured from HDR data is recorded as data to be controlled based on the reproduction control information file, and
attribute information of the HDR graphics data in a case where the HDR graphics data is included as the data to be controlled based on the reproduction control information file, as record data, and
a reproducing device that reproduces the reproduction data having
a configuration that enables acquisition of the attribute information of the HDR graphics data by reference to the reproduction control information file.

Moreover, a fourth aspect of the present disclosure lies in an information processing method executed in an information processing apparatus,
the information processing apparatus including a data processing unit that executes reproduction processing of disk recorded data,
the data processing unit
acquiring a reproduction control information file corresponding to reproduction data recorded on a disk,
determining whether high dynamic range (HDR) graphics data configured from HDR data is recorded on the disk on the basis of record data of the acquired reproduction control information file, and
further acquiring attribute information of the HDR graphics data from the reproduction control information and executing control of output data to a display device according to the acquired attribute information in a case where the HDR graphics data is recorded on the disk.

Moreover, a fifth aspect of the present disclosure lies in a program for causing an information processing apparatus to execute information processing,
the information processing apparatus including a data processing unit that executes reproduction processing of disk recorded data,
the program causing the data processing unit to execute processing of
acquiring a reproduction control information file corresponding to reproduction data recorded on a disk,
determining whether high dynamic range (HDR) graphics data configured from HDR data is recorded on the disk on the basis of record data of the acquired reproduction control information file, and
further acquiring attribute information of the HDR graphics data from the reproduction control information and executing control of output data to a display device according to the acquired attribute information in a case where the HDR graphics data is recorded on the disk.

The fifth aspect of the present disclosure lies in an information processing apparatus including a data processing unit that executes reproduction processing of disk recorded data, in which
the data processing unit
acquires a reproduction control information file corresponding to reproduction data recorded on a disk,
determines whether an ultra high definition (UHD) video is recorded on the disk on the basis of record data of the acquired reproduction control information file, and
further acquires video information of the ultra high definition (UHD) video from the reproduction control information and executes control of output data to a display device according to the acquired video information in a case where the ultra high definition (UHD) video is recorded on the disk.

Note that the program of the present disclosure is a program that can be provided to an information processing apparatus and a computer system that can execute various program codes with a recording medium or communication medium provided in a computer-readable format. By providing such a program in a computer-readable format, processing according to the program is realized on the information processing apparatus or the computer system.

Other objectives, characteristics, and advantages of the present disclosure will become clear by detailed description based on embodiments and appended drawings of the present disclosure described below. Note that a system in the present specification is a logical set configuration of a plurality of devices and is not limited to devices having configurations, which exist in the same housing.

### EFFECTS OF THE INVENTION

According to a configuration of an embodiment of the present disclosure, attribute information of high dynamic range (HDR) data is acquired from a playlist file and a clip information file, and video reproduction according to a display device is realized.

To be specific, a data processing unit that executes reproduction processing of disk recorded data acquires the playlist file and the clip information file as reproduction control information files corresponding to reproduction data recorded on a disk, determines whether HDR graphics data is recorded on the disk on the basis of record data of these files, and further acquires attribute information of the HDR graphics data from reproduction control information, and executes control of output data for the display device according to the acquired information in a case where the HDR graphics data is recorded on the disk.

With the present configuration, the attribute information of the HDR graphics data is acquired from the playlist file and the clip information file, and the video reproduction according to the display device is realized.

Note that the effects described in the present specification are mere examples and are not limited, and further, additional effects may be exhibited.

### BRIEF DESCRIPTION OF DRAWINGS

Fig. 1 is a diagram for describing an example of reproduction processing of SDR content and HDR content.
Fig. 2 is a diagram for describing an example of record data on a Blu-ray (registered trademark) disc (BD).
Fig. 3 is a diagram for describing examples of data record on disks, and reproduction processing in a reproducing device.
Fig. 4 is a diagram for describing an example of data record on a disk, and reproduction processing in a reproducing device.
Fig. 5 is a diagram for describing a directory configuration example of data recorded on a medium according to a BDMV format.
Fig. 6 is a diagram for describing correspondence between playlists defined in the BDMV format and reproduction data.
Figs. 7(a) to 7(c) are diagrams for describing a configuration example of presentation graphics stream data (PG data) that configures subtitle data and menu data.
Fig. 8 is a diagram for describing a configuration example of presentation graphics stream data (PG data) that configures subtitle data and menu data.
Fig. 9 is a diagram for describing a configuration example of presentation graphics stream data (PG data) that configures subtitle data and menu data.
Fig. 10 is a diagram for describing a configuration example of presentation graphics stream data (PG data) that configures subtitle data and menu data.
Fig. 11 is a diagram for describing a configuration example of presentation graphics stream data (PG data) that configures subtitle data and menu data.
Fig. 12 is a diagram for describing a data configuration example in a playlist file.
Fig. 13 is a diagram for describing a data configuration example of an extension data recording field [ExtensionData ()] in a playlist file.
Fig. 14 is a diagram for describing identification information indicating a type of extension data to be recorded in an extension data recording field [ExtensionData()].
Fig. 15 is a diagram for describing a data configuration example of a HDR-PG data compatible STN table [STN_table_HDR] to be recorded in an extension data recording field [ExtensionDate()] in a playlist file.
Fig. 16 is a diagram for describing a detailed configuration example of a stream attribute information recording field [Stream_attribute_HDR()].
Fig. 17 is a diagram for describing an example of data setting to a dynamic range setting information recording field.
Fig. 18 is a diagram for describing an example of data setting to a color gamut setting information recording field.
Fig. 19 is a diagram for describing a detailed configuration example of stream attribute information recording field [Stream_attribute_HDR()].
Fig. 20 is a diagram for describing an example of data setting to a dynamic range setting information recording field.
Fig. 21 is a diagram for describing a detailed configuration example of a stream attribute information recording field [Stream_attribute_HDR()].
Fig. 22 is a diagram for describing an example of data setting to a dynamic range setting information recording field.
Fig. 23 is a diagram illustrating a flowchart for describing a reproduction sequence of an information processing apparatus (reproducing device) that performs data reproduction, using a playlist file.
Figs. 24(a) to 24(c) are diagrams for describing an example of recording of HDR-PG data compatible video information (attribute information) in a playlist file.
Fig. 25 is a diagram for describing a detailed configuration example of a PG data compatible video information (attribute information) recording field.
Fig. 26 is a diagram illustrating a flowchart for describing a reproduction sequence of an information processing apparatus (reproducing device) that performs data reproduction, using a playlist file.
Fig. 27 is a diagram for describing a data configuration example in a clip information file.
Fig. 28 is a diagram for describing a data configuration example of an extension data recording field [ExtensionData ()] in a clip information file.
Fig. 29 is a diagram for describing an identifier setting example according to a type of extension data to be recorded in an extension data recording field [ExtensionData()].
Fig. 30 is a diagram for describing a data configuration example of HDR-PG data compatible program information [ProgramInfo_HDR] to be recorded in an extension data recording field [ExtensionDate()] in a clip information file.
Fig. 31 is a diagram for describing a detailed configuration example of a stream encoding information recording field [StreamCodingInfo()].
Figs. 32(a) and 32(b) are diagrams for describing a setting example of a value of video information.
Fig. 33 is a diagram illustrating a flowchart for describing a reproduction sequence of an information processing apparatus (reproducing device) that performs data reproduction, using a clip information file.
Fig. 34 is a diagram for describing a data configuration example of a program information recording field [ProgramInfo ()] included in a clip information file.
Figs. 35(a) and 35(b) are diagrams for describing an example of stream attribute information to be recorded in a clip information file.
Fig. 36 is a diagram for describing a detailed configuration example of a stream encoding information recording field [StreamCodingInfo()] in a clip information file.
Fig. 37 is a diagram illustrating a flowchart for describing a reproduction sequence of an information processing apparatus (reproducing device) that performs data reproduction, using a clip information file.
Fig. 38 is a diagram for describing a hardware configuration example of an informing processing device applied to processing of the present disclosure.

### MODE FOR CARRYING OUT THE INVENTION

Hereinafter, details of an information processing apparatus, an information recordingmedium, and an information processing method, and a program will be described with reference to the drawings. Note that the description will be given according to the items below.
1. Outline of types of disk recorded content and reproduction processing of disk recorded content
2. Outlines of data recording configuration on disk and reproduction processing
3. Specific configuration example of presentation graphics (PG) data
4. Embodiment to record video information (attribute information) of presentation graphics (PG) data in playlist file
   4-1. (Embodiment 1-1) Embodiment to record video information (attribute information) of presentation graphics (PG) data in extension data recording field [ExtensionData()] of playlist file
   4-2. (Embodiment 1-2) Implementation to record video information (attribute information) of presentation graphics (PG) data in reproduction stream information recording field [PlayList()] of playlist file]
5. Embodiment to record video information (attribute information) of presentation graphics (PG) data in clip information file
   5-1. (Embodiment 2-1) Embodiment to record video information (attribute information) of presentation graphics (PG) data in extension data recording field [ExtensionData()] of clip information file
   5-2. (Embodiment 2-2) Embodiment to record video information (attribute information) of presentation graphics (PG) data in program information recording field [ProgramInfo()] of clip information file
6. Generation (authoring) of record data to medium and data recording processing
7. Configuration example of information processing apparatus
8. Summary of configuration of present disclosure

### [1. Outline of types of disk recorded content and reproduction processing of disk recorded content]

First, an outline of types of disk recorded content and reproduction processing of disk recorded content will be described.

As described above, the standardization of recording types of ultra high definition video (UHD video) data to be recorded on Blu-ray (registered trademark) discs (BDs) has been currently in progress by the Blu-ray (registered trademark) disc association (BDA).

The BDA has been formulating a BD standard in which not only 4K videos with an increased number of pixels but also high dynamic range (HDR) videos with expanded color gamut that can be output and contrast ratio are employed as recording/reproducing data using a BD.

Note that an "HDR video" described in the present disclosure includes subtitle data and presentation graphics stream (PG) data used for a menu screen.

As described above, many of current displays such as televisions are HDR incompatible displays that do not have a function to display HDR data and can output only standard dynamic range (SDR) data.

From now, HDR compatible displays are expected to become popular over times. However, the HDR incompatible displays and the HDR compatible displays are expected to coexist for a while.

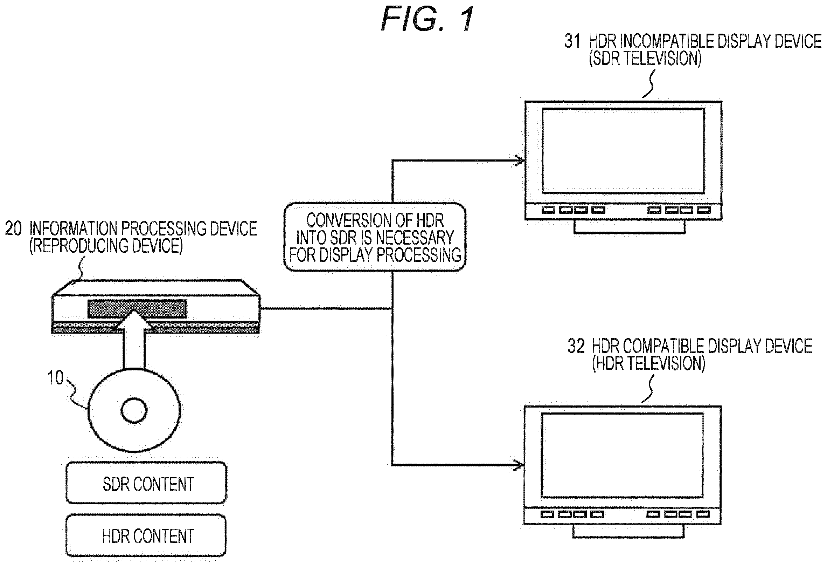

In this case, as illustrated in Fig. 1, an information processing apparatus (reproducing device) 20 that reproduces and outputs HDR video content recorded on an information recording medium (disk) 10 such as a BD is required to perform processing for outputting the reproduction data to two different display devices including an HDR incompatible display device (SDR television) 31 and an HDR compatible display device (HDR television) 32.

For example, in a case where the information processing apparatus (reproducing device) 20 is connected to the HDR incompatible display device (SDR television) 31 and reproducing and outputting the HDR video content recorded on the information recording medium (disk) 10 such as a BD, processing of converting an HDR video into an SDR video and outputting the SDR video is necessary. Alternatively, processing of displaying, on the HDR incompatible display device (SDR television) 31, a message notifying that the content recorded on the information recording medium (disk) 10 is an HDR video and cannot be output is necessary.

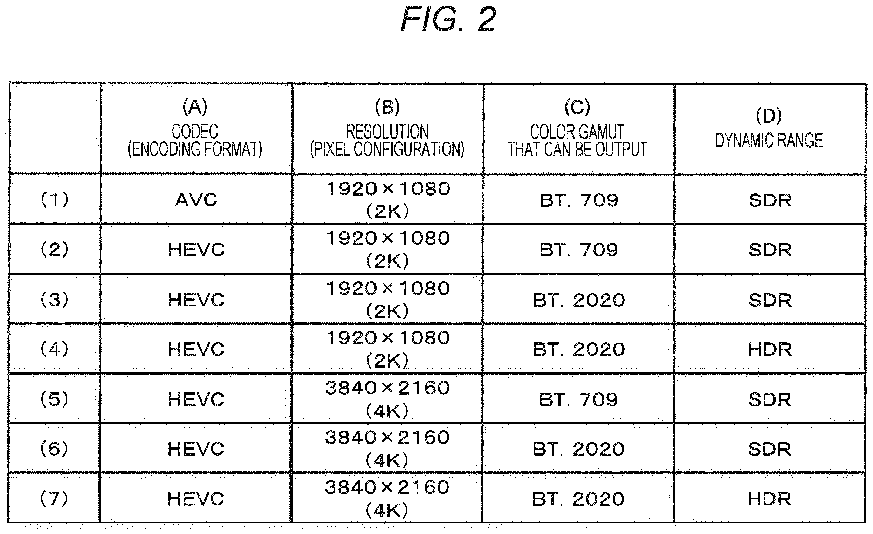

Fig. 2 illustrates a data example that is to be permitted as record data on a Blu-ray (registered trademark) disc (BD) by the Blu-ray (registered trademark) disc association (BDA) .

Fig. 2 illustrates seven types of data.

Fig. 2 illustrates following elements of the seven types of data.
(A) Codec (encoding format)
(B) Resolution (pixel configuration)
(C) Color gamut that can be output
(D) Dynamic range

As the codec, either one of two types of AVC and HEVC is permitted.

As the resolution, either one of 2K (1920 × 1080) or 4K (3840 × 2160) is permitted.

As the output color gamut, either one of BT. 709 or BT. 2020 is permitted.

BT.2020 has wider color gamut than BT.707, and can express a color closer to a real color.

As the dynamic range, two ranges of HDR and SDR are permitted.

The HDR video can allow an output of a video having a much larger contrast ratio than the SDR video. The HDR video can allow a video output having a contrast ratio exceeding 100000 : 1, and can allow clear reproduction of a dark area and a bright area without occurrence of blocked up shadows and blown out highlights.

As illustrated in Fig. 2, the various types of data are recorded on the BD.

Meanwhile, as for the display device to be connected to a disk reproducing device, use of various display devices such as the HDR incompatible display device (SDR television) 31 and the HDR compatible display device (HDR television) 32 is expected, as illustrated in Fig. 1.

Note that the information processing apparatus 20 as the disk reproducing device and the display devices 31 and 32 are connected by an HDMI (registered trademark) cable, for example, and the information processing apparatus 20 can detect whether the display device connected through the HDMI (registered trademark) cable is the HDR compatible device or the HDR incompatible device.

The information processing apparatus 20 can execute different types of processing between a case where the connected display device is the HDR incompatible display device (SDR television) 31 and a case where the connected display device is the HDR compatible display device (HDR television) 32 on the basis of the detection information.

That is, the information processing apparatus 20 can execute processing according to the connected display device.

To be specific, the information processing apparatus 20 executes following processing, for example:
(A) In the case where a video stored on the information recording medium (disk) 10 is only the HDR video, and
   (a1) in a case where the connected display device is the HDR television,
      the information processing apparatus 20 outputs the HDR video to be reproduced as it is from the disk; and
   (a2) in a case where the connected display device is the SDR television,
      the information processing apparatus 20 converts the HDR video to be reproduced from the disk into the SDR video and outputs the SDR video, or displays a message notifying that the video cannot be reproduced.
(B) In the case where the video stored on the information recording medium (disk) 10 is only the SDR video, and
   (a1) in a case where the connected display device is the HDR television,
      the information processing apparatus 20 outputs the SDR video to be reproduced as it is from the disk; and
   (a2) in a case where the connected display device is the SDR television,
      the information processing apparatus 20 outputs the SDR video to be reproduced as it is from the disk.

   Note that the HDR television can output the SDR video as well.
(C) In a case where the HDR video and the SDR video are stored on the information recording medium (disk) 10, and
   (a1) in a case where the connected display device is the HDR television,
      the information processing apparatus 20 selects the HDR video from the disk, and reproduces and outputs the HDR video; and
   (a2) in a case where the connected display device is the SDR television,
      the information processing apparatus 20 selects the SDR video from the disk, and reproduces and outputs the SDR video.

Note that, in the current situation where the HDR compatible display and the HDR incompatible display coexist, a content providing configuration to manufacture the same content as two types of data including the HDR video and the SDR video, record the two types of data on one disk or two disks, and provide the disks to users is more likely to be employed.

Therefore, coexistence of the HDR content as the recorded HDR video and the SDR content as the recorded SDR video as disk recorded content is expected for a while.

In such a current situation, as a content storing disk to be provided to the users, for example, a disk such as a BD-ROM, a plurality of types of disks is more likely to be combinedly used.

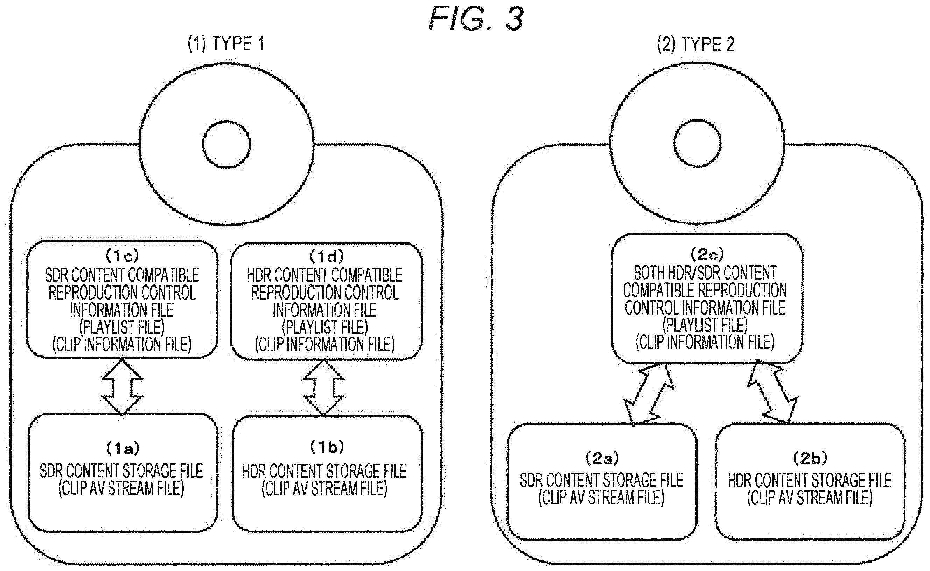

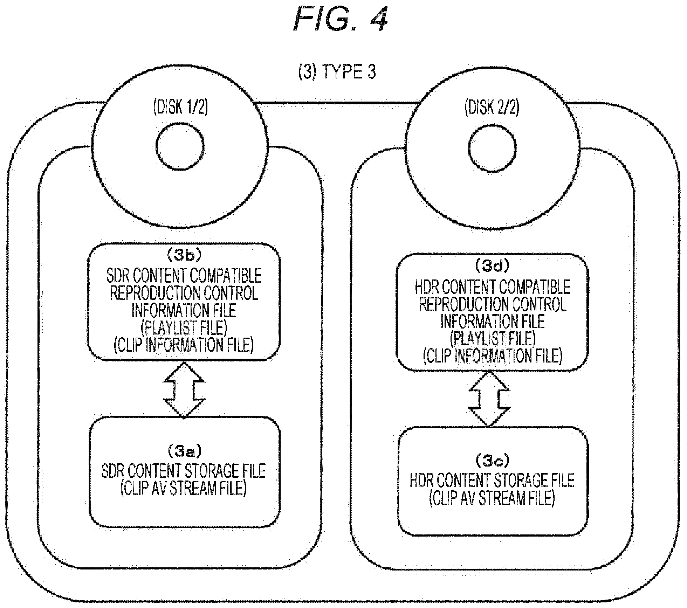

An example of a configuration to record data to a disk will be described with reference to Figs. 3 and 4.

Figs. 3 and 4 illustrate examples of three types of content storing disks (BD-ROMs).

The disk of (1) type 1 illustrated in Fig. 3 stores following record data in one disk:
(1a) a clip AV stream file that stores the SDR content;
(1b) a clip AV stream file that stores the HDR content;
(1c) an SDR compatible playlist file and an SDR compatible clip information file as reproduction control information files of the SDR content; and
(1d) an HDR compatible playlist file and an HDR compatible clip information file as reproduction control information files of the HDR content.

The clip AV stream file is a file that stores reproduction data according to an MPEG-2TS (transport stream) format defined as a format of record data to a BD.

The playlist file and the clip information file are files that store reproduction control information used by a reproducing device in reproducing data stored in the clip AV stream file.

Note that these files will be described in detail below.

The setting of (1) type 1 of Fig. 3 is a configuration to individually set the clip AV stream file that stores the SDR video data and the clip AV stream file that stores the HDR video data. That is, the following two clip AV stream files are recorded on the disk:
(1a) the clip AV stream file that stores the SDR content; and
(1b) the clip AV stream file that stores the HDR content.

These files are, for example, one piece of the same movie content, and are two video data having different dynamic range setting.

Further, the playlist files and the clip information files as individual reproduction control information files are recorded for the respective two clip AV stream files on the disk.

That is, the playlist files and the clip information files are the following reproduction control information files:
(1c) the SDR compatible playlist file and the SDR compatible clip information file as the reproduction control information files of the SDR content; and
(1d) the HDR compatible playlist file and the HDR compatible clip information file as the reproduction control information files of the HDR content.

The reproducing device on which the disk is mounted selects the following combination of the data files and executes the reproduction processing in a case where the display device connected to the reproducing device is the HDR incompatible display (SDR television):
(1a) the clip AV stream file that stores the SDR content; and
(1c) the SDR compatible playlist file and the SDR compatible clip information file as the reproduction control information files of the SDR content.

Further, in a case where the display device connected to the reproducing device is the HDR compatible display (HDR television), the reproducing device selects the following combination of the data files and executes the reproduction processing:
(1b) the clip AV stream file that stores the HDR content; and
(1d) the HDR compatible playlist file and the HDR compatible clip information file as the reproduction control information files of the HDR content.

As described above, the reproducing device needs to select the reproduction control information file (the playlist file and the clip information file), and the clip AV stream file, and perform the reproduction processing according to the display device connected to the reproducing device.

Therefore, the files to be selected need to be determined by a method of some sort before the reproduction processing is started.

A configuration to record the information necessary for the processing of the reproducing device in the playlist file or the clip information file and use the file will be described below.

The disk of (2) type 2 illustrated in Fig. 3 has the following record data in one disk:
(2a) a clip AV stream file that stores the SDR content;
(2b) a clip AV stream file that stores the HDR content; and
(2c) an SDR/HDR compatible playlist file and an SDR/HDR compatible clip information file as the reproduction control information files commonly applicable to the SDR content and the HDR content.

The setting of (2) type 2 of Fig. 3 is a configuration to individually set the clip AV stream file that stores the SDR video data and the clip AV stream file that stores the HDR video data, similar to the type 1.

That is, the following two clip AV stream files are recorded on the disk:
(2a) the clip AV stream file that stores the SDR content; and
(2b) the clip AV stream file that stores the HDR content.

These files are, for example, one piece of the same movie content, and are two video data having different dynamic range setting.

However, in (2) type 2, the playlist file and the clip information file as one reproduction control information files commonly used for the two clip AV stream files are recorded on the disk.

That is, the playlist file and the clip information file are the following reproduction control information files:
(2c) a SDR/HDR compatible playlist file and an SDR/HDR compatible clip information file as the reproduction control information files commonly applicable to the SDR content and the HDR content.

The reproducing device on which the disk is mounted selects the following combination of the data files and executes the reproduction processing in a case where the display device connected to the reproducing device is the HDR incompatible display (SDR television):
(2a) the clip AV stream file that stores the SDR content; and
(2c) the SDR/HDR compatible playlist file and the SDR/HDR compatible clip information file as the reproduction control information files commonly applicable to the SDR content and the HDR content.

Further, in a case where the display device connected to the reproducing device is the HDR compatible display (HDR television), the reproducing device selects the following combination of the data files and executes the reproduction processing:
(2b) the clip AV stream file that stores the HDR content; and
(2c) the SDR/HDR compatible playlist file and the SDR/HDR compatible clip information file as the reproduction control information files commonly applicable to the SDR content and the HDR content.

However, in this case, the reproducing device needs to select data to be selected and reproduced with the SDR/HDR compatible playlist file and the SDR/HDR compatible clip information file from either one of the following two clip AV stream files:
(2a) the clip AV stream file that stores the SDR content; and
(2b) the clip AV stream file that stores the HDR content.

The reproducing device needs to acquire information for performing this selection processing.

In an embodiment described below, a configuration in which the information is recorded in the SDR/HDR compatible playlist file or the SDR/HDR compatible clip information file, and the processing executed by the reproducing device will be described.

The disks of (3) type 3 illustrated in Fig. 4 are setting to provide a set of the two disks to the user.

The disk (1/2) has the following record data:
(3a) a clip AV stream file that stores the SDR content; and
(3b) an SDR compatible playlist file and an SDR compatible clip information file as the reproduction control information files of the SDR content.

The disk (2/2) has the following record data:
(3c) a clip AV stream file that stores the HDR content; and
(3d) an HDR compatible playlist file and an HDR compatible clip information file as the reproduction control information files of the HDR content.

The setting of (3) type 3 of Fig. 4 is to provide the two disks to the user as a set, the two disks including the disk (1/2) that stores the clip AV stream file that stores the SDR video data, and the SDR content compatible reproduction control information, and the disk (2/2) that stores the clip AV stream file that stores the HDR video data, and the HDR content compatible reproduction control information.

Note that the content stored in the disks are, for example, one piece of the same movie content, and two video data having different dynamic range setting are recorded.

The reproducing device on which the disk (1/2) recorded with the SDR content is mounted executes content reproduction, using the following data recorded on the disk (1/2), in a case where the display device connected to the reproducing device is the HDR incompatible display (SDR television):
(3a) the clip AV stream file that stores the SDR content; and
(3b) the SDR compatible playlist file and the SDR compatible clip information file as the reproduction control information files of the SDR content.

However, in a case where the display device connected to the reproducing device on which the disk (1/2) recorded with the SDR content is mounted is the HDR compatible display (HDR television), the reproducing device favorably performs processing of outputting a message to change the disk to another disk (2/2) to the HDR compatible display (HDR television).

Further, the reproducing device on which the disk (2/2) recorded with the HDR content is mounted executes content processing, using the following data recorded on the disk (2/2), in a case where the display device connected to the reproducing device is the HDR compatible display (HDR television):
(3c) the clip AV stream file that stores the HDR content; and
(3d) the HDR compatible playlist file and the HDR compatible clip information file as the reproduction control information files of the HDR content.

However, in a case where the display device connected to the reproducing device on which the disk (2/2) recorded with the HDR content is mounted is the HDR incompatible display (SDR television), the reproducing device favorably performs processing of outputting a message to change the disk to another disk (1/2) to the SDR compatible display (SDR television), or favorably performs conversion from the HDR data into the SDR data and outputs the SDR data.

The reproducing device needs to acquire information for performing such processing.

In an embodiment described below, a configuration in which the information is recorded in the playlist file or the clip information file, and the processing executed by the reproducing device will be described.

Note that, in the description of the setting examples of the data stored on the disks illustrated in Figs. 3 and 4, the SDR content and the HDR content have been described as division examples.

However, the above is an example, and for example, the content storage types described with reference to Figs. 3 and 4 are applicable in a case of providing a disk on which the following content having different setting is stored:
(1) AVC content and HEVC content;
(2) 2K content (1920 × 1080 pixels) and 4K content (3840 × 2160 pixels); or
(3) content of the color gamut = BT.707 and content of the color gamut = Bt.2020.

That is, in a case of producing one set of content having at least one different element, of the elements including the encoding format, the resolution, the color gamut, and the dynamic range described with reference to Fig. 2, manufacturing a disk and providing the disk to the user, the disk having any setting, of the setting of the types 1 to 3 described with reference to Figs. 3 and 4, is expected.

### [2. Outlines of data recording configuration on disk and reproduction processing]

Next, outlines of a recording format (BDMV format) in recording content such as a movie on a Blu-ray (registered trademark) disc (BD) and reproduction processing executed by a reproducing device will be described.

In the BDMV format, data of videos, audio, subtitles, and the like as data to be reproduced is stored and record in the clip AV stream file.

The clip AV stream file is a file in which a 188-byte transport stream (TS) packet is set as a configuration element. The transport stream packets, that is, the TS packets are arrayed according to the MPEG-2TS (transport stream) format.

The MPEG-2TS format is a format standardized in ISO 13818-1, and is used for, for example, data recording on the Blu-ray (registered trademark) disc (BD) and digital broadcasting.

Note that encoded data of a video, audio, and a still image, storage of which is permitted according to the MPEG-2TS format is, for example, the following encoded data:
the video: MPEG-1, MPEG-2, AVC (MPEG-4AVC), and HEVC (MPEG-4HEVC);
the audio: MP1, MP2, MP3, linear PCM, and DTS; and
the still image: JPEG.

The above encoded data are distributed and stored in the transport stream (TS) packets defined in the MPEG-2TS, for example.

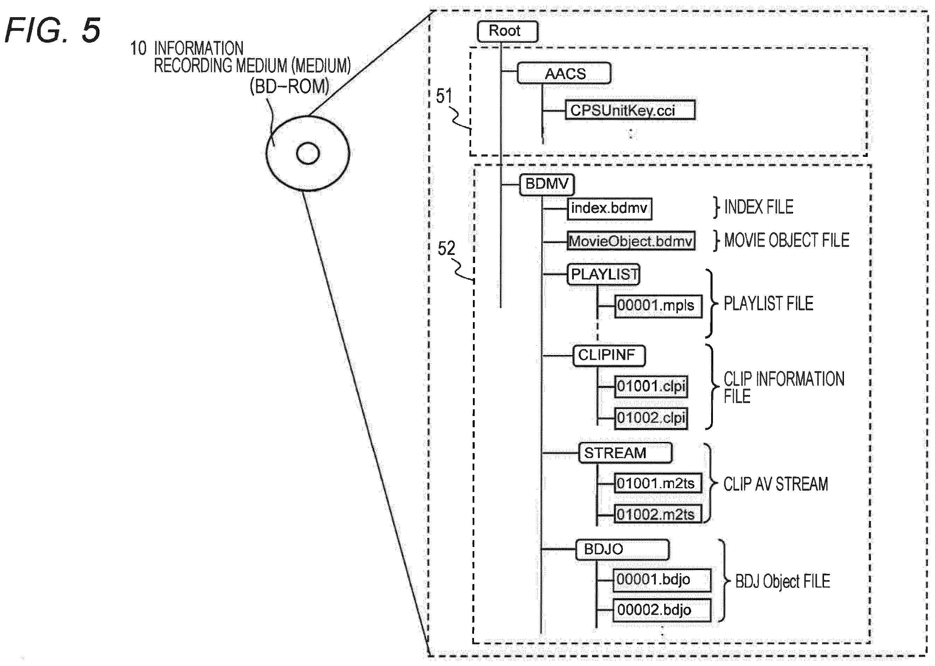

Fig. 5 is a diagram illustrating a directory of record data according to the BDMV format, which is recorded on the information recording medium (medium) 10 as a ROM-type Blu-ray (registered trademark) disc (BD).

As illustrated in Fig. 5, the directory is divided into a management information setting unit 51 (AACS directory) and a data unit 52 (BDMV directory).

A CPS unit key file as an encryption key of data, a use control information file, and the like are stored in the management information setting unit 51 (AACS directory).

The CPS unit key to be applied to decoding of encryption data as data to be reproduced stored in the clip AV stream file is stored in the CPS unit key file as encryption key data.

The reproducing device acquires the CPS unit key from the CPS unit key file by processing to which a device key stored in the reproducing device and the data stored on the disk are applied, applies the acquired CPS unit key to decode the encryption data stored in the clip AV stream file, and performs the reproduction processing.

Meanwhile, under the BDMV directory of the data unit 52, the following files are recorded, for example:
an index file;
a playlist file;
a clip information file;
a clip AV stream file; and
a BDJO file.

In the index file, title information as index information to be applied to the reproduction processing is stored.

The playlist file is a file that defines a preproduction order of content according to program information of a reproduction program specified by the title, and includes, for example, specification information in a clip information file in which reproduction position information and the like are recorded.

The clip information file is a file specified by the playlist file, and includes reproduction position information in the clip AV stream file, and the like.

The clip AV stream file is a file in which AV stream data as an object to be reproduced is stored. The clip AV stream file is configured from packets in which the data of the video, audio, subtitle, and the like as the objects to be reproduced are stored.

The BDJO file is a file in which execution control information of a file in which a JAVA (registered trademark) program, a command, and the like are stored is stored.

A sequence to reproduce the content recorded on the information recording medium by the information processing apparatus is as follows:
(a) first, a specific title is specified from an index file by a reproduction application;
(b) a reproduction program associated with the specified title is selected;
(c) a playlist that defines the reproduction order of content and the like is selected according to program information of the selected reproduction program; and
(d) an AV stream as content actual data or a command is read by clip information defined by the selected playlist, and reproduction of the AV stream or execution processing of the command is performed.

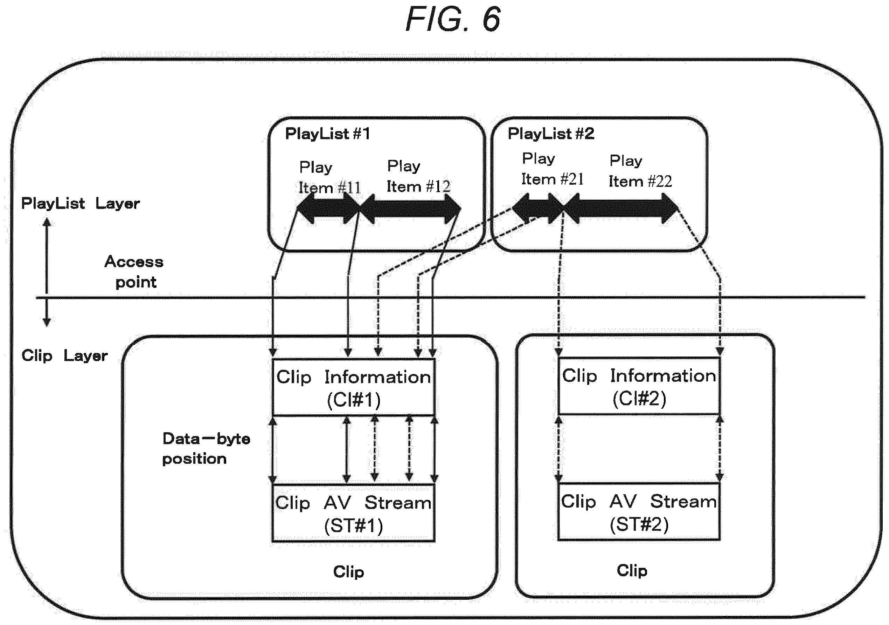

Fig. 6 is a diagram for describing a corresponding relationship among the following data recorded on the information recording medium (medium) 10:
the playlist file;
the clip information file; and
the clip AV stream file.

The AV stream made of video and audio data as actual data to be reproduced is recorded as a clip AV stream file, and a playlist (PlayList) file and a clip information file are defined as management information and the reproduction control information file of the AV stream.

These files of a plurality of categories can be divided into the following two layers:
a playlist layer including the playlist file; and
a clip layer made of the clip AV stream file and the clip information file,
as illustrated in Fig. 6.

Note that one clip information file is associated with one clip AV stream file, and a pair of these files is considered as one object, and these files are collectively called clip, or called clip file.

Detail information of the data included in the clip AV stream file, for example, the management information such as an EP map on which position information of an I picture of MPEG data, and the like are recorded, is recorded in the clip information file.

The clip AV stream file stores data of the MPEG-2TS (transport stream) arranged according to a defined structure of the BDMV format.

Further, the clip information file stores the management information for acquiring a reproduction starting position of the data stored in the clip AV stream file, such as correspondence data of a data position of byte string data in the clip AV stream file and a reproduction time position as a reproduction starting point (entry point, EP) when expanded on a temporal axis.

The playlist includes information that points out access points corresponding to the reproduction starting position and a reproduction termination position of the clip with timestamps as information on the temporal axis.

For example, a data reading position in the clip AV stream file, that is, an address as the reproduction starting point can be acquired by reference to the clip information file on the basis of the timestamp that indicates a reproduction time elapsed position from the starting point of content.

The clip information file is used to find out address information of the stream in the clip AV stream file, decoding of which is to be started, with the timestamp.

As described above, the playlist file includes the specification information of reproduction sections for reproducible data included in the clip (= the clip information file + the clip AV stream file) layer.

One or more play items are set to the playlist file, and each of the play items includes the specification information of the reproduction section for the reproducible data included in the clip (= the clip information file + the clip AV stream file) layer.

### [3. Specific configuration example of presentation graphics (PG) data]

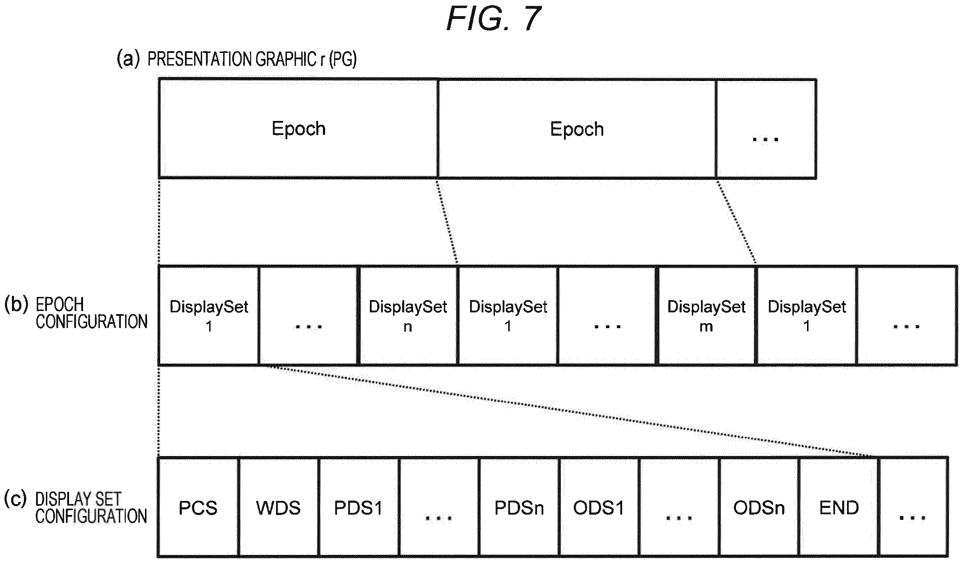

Next, a specific configuration example of presentation graphics (PG) data stored in the clip AV stream file will be described with reference to Figs. 7 (a) to 7 (c) and subsequent drawings.

For example, the subtitle data have two different formats including a presentation graphics stream and a text stream (text subtitle stream).

The presentation graphics stream data (PG data) is so-called data in the bitmap format, and color setting of the color gamut (color space) defined in advance and gradation (dynamic range) expression are available, and richer expression can be performed.

The standard by the Blu-ray (registered trademark) disc association (BDA) as a standardization formulation organization of the Blu-ray (registered trademark) disc (BD) defines that the subtitle data used in the BD on which an ultra high definition video (UHD video) is stored is the presentation graphics stream data (PG data).

The PG data is used not only for the subtitle data to be superimposed on the video and output, but also for a title of content, menu data for outputting operation information, and the like.

The processing of the present disclosure can be applied to all of processing to which the PG data is applied, that is, all of processing using the PG data, such as the subtitle data and a menu screen.

The PG data is stored in the clip AV stream file.

A detailed configuration of the PG data stored in the clip AV stream file will be described with reference to Figs. 7(a) to 7(c) and subsequent drawings.

The PG data is data configured from, for example, subtitle video data itself made of bitmap data, menu configuration information, information that indicates display types of the subtitle and the menu data, and the like.

The PG data is stored in the clip AV stream file, and is configured from data units called epochs, as illustrated in Fig. 7(a).

One epoch is a unit configuration of the subtitle data set corresponding to one picture or a group of picture (GOP) .

As illustrated in Fig. 7(b), the epoch is configured from one or a plurality of display sets (DisplaySets).

The display set is a minimum set in displaying the subtitle, and corresponds to, for example, one sheet of subtitle video. The epoch is configured from, for example, a unit corresponding to the play item. That is, the epoch is configured from the display sets for displaying the subtitle displayed during reproduction of a certain play item.

The epoch is not only configured from the unit of the play item but also can be arbitrarily configured on the authoring side. For example, in the case of the PG data, the epoch is configured from a plurality of display sets respectively displaying a plurality of subtitles corresponding to a series of lines in a movie or the like. Further, for example, the epoch can be configured from a plurality of display sets respectively displaying decomposed letters as subtitles, where one line is decomposed into letters.

Fig. 7(c) illustrates a configuration example of the display set. The display set of the presentation graphics (PG) has different setting in a case where the data to be stored in the display set is the subtitle data and in a case where the data to be stored in the display set is the menu data.

The data illustrated in Fig. 7 (c) is an example of the case where the data to be stored in the display set is the subtitle data.

In the case where the data to be stored in the display set is the subtitle data, the display set is configured from the following five types of segments, as illustrated in Fig. 7(c) :
a presentation composition segment(PCS);
a window definition segment (WDS);
a palette definition segment (PDS);
an object definition segment (ODS); and
an END segment.

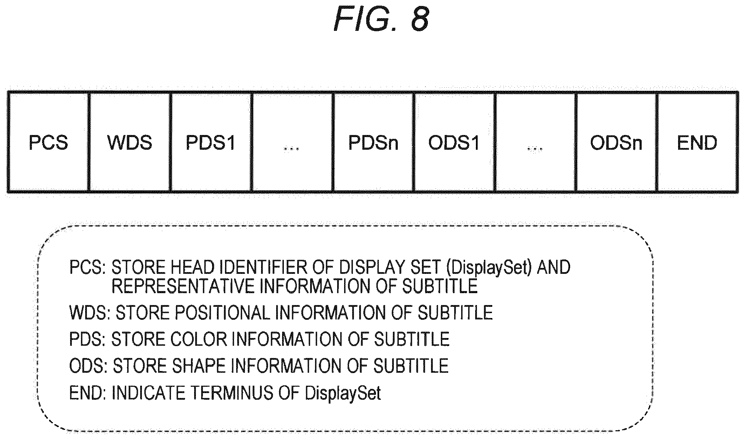

Data to be stored in the segments in the case where the data to be stored in the display set is the subtitle data will be described with reference to Fig. 8.
(1) In the PCS, information that indicates a start end of the display set, and representative information of the subtitle are stored.
(2) In the WDS, position information of the subtitle is stored.
(3) In the PDS, color information of the subtitle is stored.
(4) In the ODS, shape information of the subtitle is stored.
(5) In the END segment, information that indicates a terminus of the display set.

These data are stored in the segments that configure display set in which the subtitle data is stored.

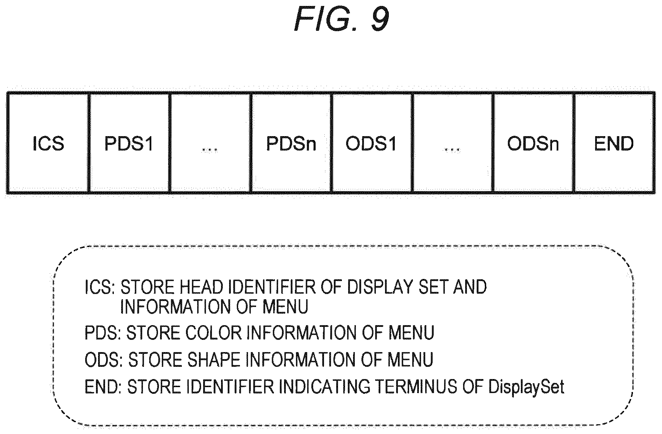

Next, a configuration of segments that configure the display set in which the menu data is stored and stored data will be described with reference to Fig. 9. In a case where the data to be stored in the display set is the menu data, the display set is configured from the following five types of segments, as illustrated in Fig. 9:
an interactive composition segment (ICS);
a palette definition segment (PDS);
an object definition segment (ODS); and
an END segment.

Data to be stored in the segments in the case where the data to be stored in the display set is the menu data will be described.
(1) In the ICS, information that indicates a start end of the display set and configuration information of the menu are stored.
(2) In the PDS, color information of the menu is stored.
(3) In the ODS, shape information of the menu is stored.
(4) In the END segment, information that indicates a terminus of the display set is stored.

These data are stored in the segments that configure the display set in which the menu data is stored.

Note that the stored data of the palette definition segments (PDSs), that is, the palette definition segments (PDSs) that store the color information are different depending on whether the subtitle data and the menu data are configured from the high dynamic range (HDR) video data, that is, the HDR graphics data, or whether the subtitle data and the menu data are configured from the standard dynamic range (SDR) video data, that is, the SDR graphics data.

This is because the dynamic ranges are different between the HDR graphics data and the SDR graphics data, and thus PDS stored values are also different.

Note that the PDS set values are different in a case where not only the dynamic ranges but also the color gamut (color spaces) is different, for example, depending on whether BT709 is used or whether BT.2020 is used.

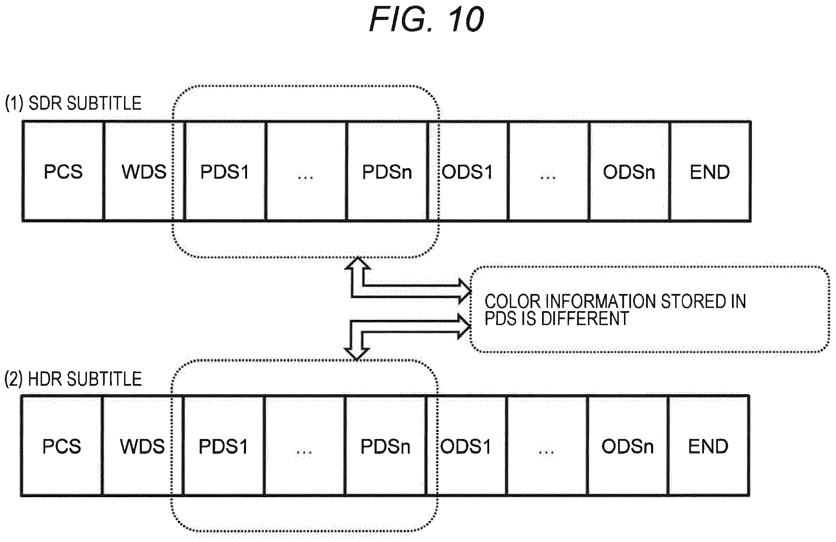

For example, as illustrated in Fig. 10, the stored data of the palette definition segments (PDSs) that store the color information are different in the following data:
(1) the SDR presentation graphics (PG) data that stores the SDR subtitle data; and
(2) the HDR presentation graphics (PG) data that stores the HDR subtitle data.

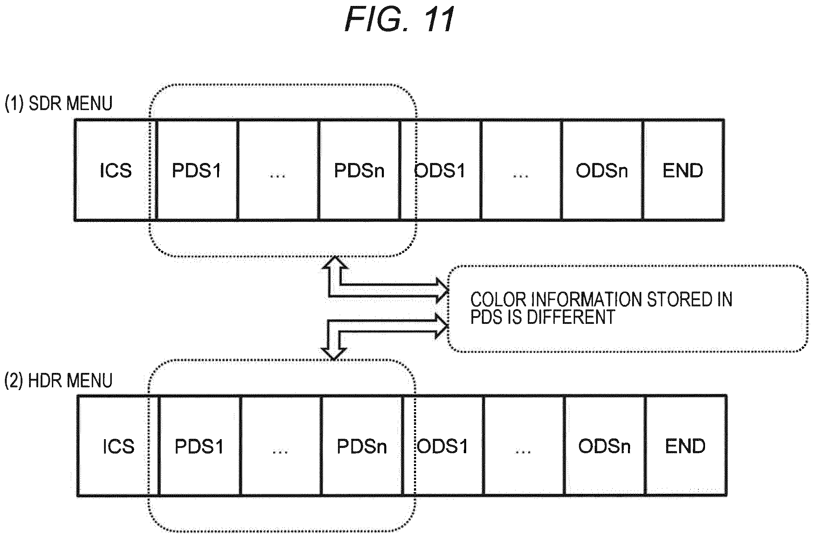

Similarly, as illustrated in Fig. 11, the stored data of the palette definition segments (PDSs) that store the color information are different in the following data:
(1) the SDR representation graphics (PG) data that stores the SDR menu data; and
(2) the HDR presentation graphics (PG) data that stores the HDR menu data.

With regard to the data that configures the subtitle data and the menu data included in the disk recorded content, the configuration to record both of the SDR data and the HDR data and selectively use the recorded data is more likely to be employed during the period in which the HDR compatible display and the HDR incompatible display coexist.

That is, as described with reference to Figs. 3, and 4, the configuration to store the SDR data and the HDR data on one or two disks and provide the disks to the user is more likely to be employed.

In such a case, the reproducing device needs to perform processing according to a function of the display device or a type of data recorded on the disk, such as selection of data to be output, conversion of the HDR into the SDR, an output of a message notifying that the data cannot be displayed, according to the function of the display device connected to the reproducing device, for example, whether the HDR compatible function or the HDR incompatible function of the display device.

Hereinafter, a specific configuration for performing the processing will be described.

### [4. Embodiment to record video information (attribute information) of presentation graphics (PG) data in playlist file]

As described with reference to Figs. 3 and 4, various types are expected as a configuration of a disk (BD-ROM) on which content such as a movie to be provided to a user is stored.

However, in any type, a reproducing device needs to execute various types of processing according to a video output function and the like of a display device connected to the reproducing device.

For example, there are following types of processing:
(a) processing of selecting presentation graphics (PG) (a subtitle or a menu) to be reproduced;
(b) processing of converting the presentation graphics (PG), for example, processing of converting HDR subtitle (or menu) data into SD subtitle (or the menu) data; and
(c) processing of displaying a message notifying that the presentation graphics (PG) (the subtitle or the menu) cannot be output.

As described above, the reproducing device needs to perform processing according to a video output function of the display device connected to the reproducing device, such as whether the function is HDR compatible or HDR incompatible, or whether a color gamut that can be output is BT. 709 compatible or BT.2020 compatible.

Note that the reproducing device is connected with the display device by an HDMI (registered trademark) cable or the like, for example, and can receive and know the function information of the display device through the HDMI (registered trademark) cable.

To perform the processing of the above (a) to (c) according to the video output function of the display device connected to the reproducing device, the reproducing device needs to know information of content stored on a disk, to be specific, information of presentation graphics (PG) stream data that configures the subtitle and the menu stored in a clip AV stream file as an object to be reproduced, for example, PG data information that indicates whether PG data is SDR-PG or HDR-PG and whether use color gamut is BT.709 or BT.2020.

Hereinafter, embodiments to record PG data information of content recorded on a disk, in a playlist file and a clip information file as reproduction control information files, will be described in order.

By recording the PG data information in the playlist file and the clip information file as the reproduction control information files, the reproducing device can acquire, from the playlist file or the clip information file, the PG data information that indicates whether the PG data that configures the subtitle and the menu recorded in the clip AV stream file as the object to be reproduced is SDR-PG or HDR-PG, and whether the use color gamut is BT.709 or BT.2020.

The reproducing device can perform the processing (a) to (c), that is, the selection of the PG data to be reproduced, the conversion of the PG data to be reproduced, the display of the message, and the like, on the basis of the acquired information and the video output function of the display device connected to the reproducing device.

Hereinafter, two embodiments will be described in order. The embodiments to be described are the following two embodiments:
(Embodiment 1) an embodiment to record video information (attribute information) of presentation graphics (PG) data in a playlist file; and
(Embodiment 2) an embodiment to record video information (attribute information) of presentation graphics (PG) data in a clip information file.

First, as Embodiment 1, an embodiment to record video information (attribute information) of presentation graphics (PG) data in a playlist file will be described.

As described with reference to Figs. 5 and 6, the playlist file is a file in which content reproduction control information such as a reproduction order of content is recorded, and includes various types of reproduction control information such as specification information in a clip information file in which reproduction position information and the like are recorded.

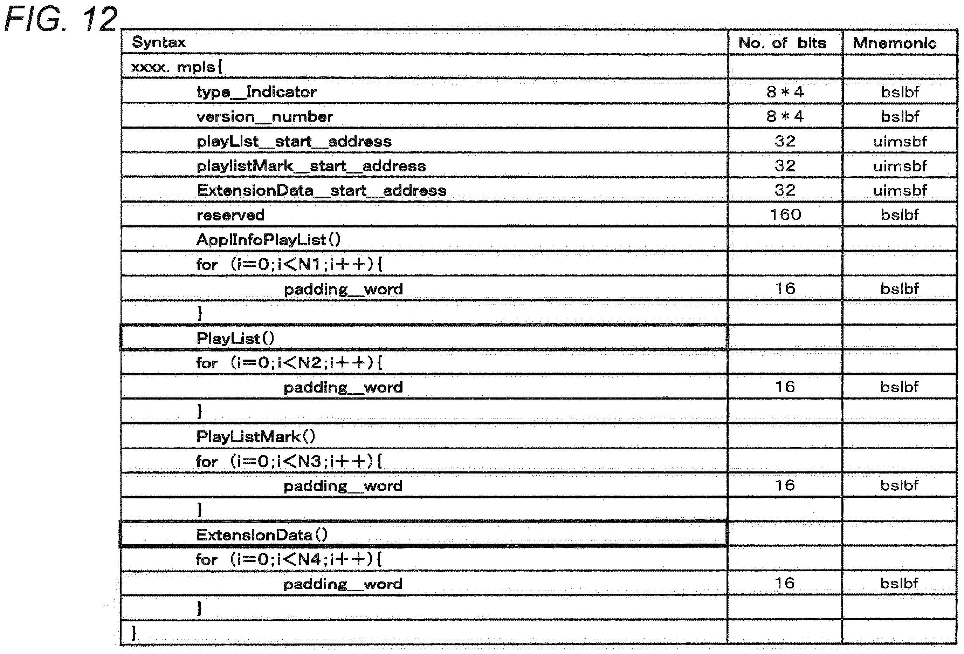

Fig. 12 is syntax that indicates a data configuration of one playlist file.

As illustrated in Fig. 12, in the playlist file, type information [type_indicator] that indicates a file type is recorded, after that, start address information [PlayList_start_address] to [ExtensionData_start_address] of substance data are recorded, and after that, recording fields of the substance data to be recorded in the playlist is provided.

In the recording fields of the substance data, the following fields are set:
(1) [AppInfoPlayList()] as a reproduction control parameter storage field in which a reproduction control parameter and the like are stored;
(2) [PlayList()] as a reproduction stream information recording field in which stream information of data to be reproduced in units of a play item included in the playlist is recorded;
(3) [PlayListMark()] as a mark information recording field in which reproduction starting position information such as an entry mark used for chapter search is recorded; and
(4) [ExtensionData()] as an extension data recording field in which various types of extension data can be recorded.

As embodiments to record presentation graphics (PG) information as reproduction control information corresponding to a subtitle and a menu in a playlist file, video information recording examples using the following two fields will be described in order:
(Embodiment 1-1) an embodiment to record video information (attribute information) of presentation graphics (PG) data in an extension data recording field [ExtensionData()] in a playlist file; and
(Embodiment 1-2) an embodiment to record video information (attribute information) of presentation graphics (PG) data in a reproduction stream information recording field [PlayList()] in a playlist file].

### [4-1. (Embodiment 1-1) Embodiment to record video information (attribute information) of presentation graphics (PG) data in extension data recording field [ExtensionData()] of playlist file]

First, an embodiment to record video information (attribute information) of presentation graphics (PG) data in an extension data recording field [ExtensionData()] in a playlist file will be described.

In the extension data recording field [ExtensionData ()] in the playlist file, a stream number table (STN table) can be recorded as extension data.

In the stream number table (STN table), stream information of a video, audio, and a subtitle to be reproduced with a play item included in a playlist are recorded. The stream information in the table includes a stream number, a packet ID (PID), a type of language, the number of channels, codec information, and the like.

This stream number table (STN table) is basically recorded in [PlayList ()] as a reproduction stream information recording field of the playlist.

The present embodiment 1-1 is an embodiment to record one additional STN table to the extension data recording field [ExtensionData()] in addition to the STN table recorded in the [PlayList()] as the reproduction stream information recording field of the playlist.

The present embodiment 1-1 is, to be specific, for example, as illustrated in the (2) type 2 of Fig. 3, applicable in a configuration that requires selection and reproduction of the following two different clip AV stream files with one playlist file:
(a) a first clip AV stream file that stores SDR-PG data made of SDR data such as an SDR subtitle and an SDR menu; and (b) a second clip AV stream file that stores HDR-PG data made of HDR data such as an HDR subtitle and an HDR menu.

The SDR-PG stream information regarding the SDR-PG data of (a) is recorded in an STN table of a reproduction stream information recording field [PlayList()] of the playlist.

Further, the HDR-PG stream information regarding the HDR-PG data of (b) is recorded in the STN table added to and recorded in the extension data recording field [ExtensionData()] of the playlist.

As described above, the two STN tables including the STN table in which stream information of the SDR-PG data is recorded and the STN table in which the stream information of the HDR-PG data is recorded are recorded in one playlist file.

A reproducing device can confirm specific PG information of the SDR-PG data and the HDR-PG data stored in the clip AV stream files stored on the disk by reference to record information of the two STN tables recorded in the one playlist file.

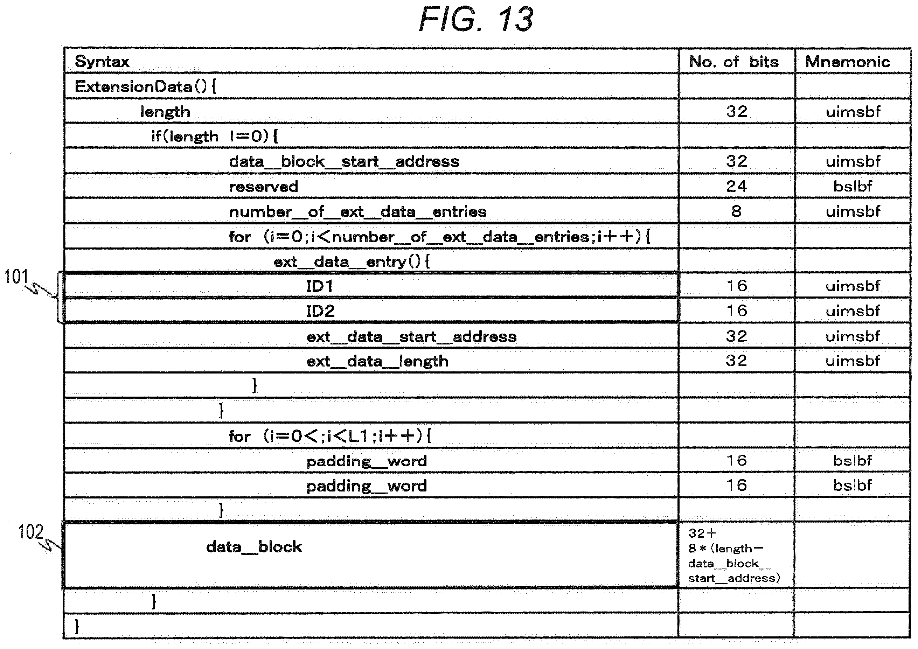

An adding and recording configuration of the STN table to the extension data recording field [ExtensionData()] in the playlist file will be described with reference to Fig. 13 and subsequent drawings.

Fig. 13 is syntax illustrating a data configuration of the extension data recording field [ExtensionData()] in the playlist file.

In this extension data recording field [ExtensionData()], various extension data, which cannot be described in other fields in the playlist file, can be recorded.

Note that, in the extension data recording field [ExtensionData()], various extension data are recorded, and thus an extension data identification data field 101 in which identification information of extension data is recorded is set.

The extension data defined with identifiers (ID1 and ID2) recorded in the extension data identification data field 101 is recorded in a data block 102.

In the present embodiment, the extension data recorded in the data block 102 is, for example, the STN table in which the HDR-PG information regarding the HDR-PG data is recorded.

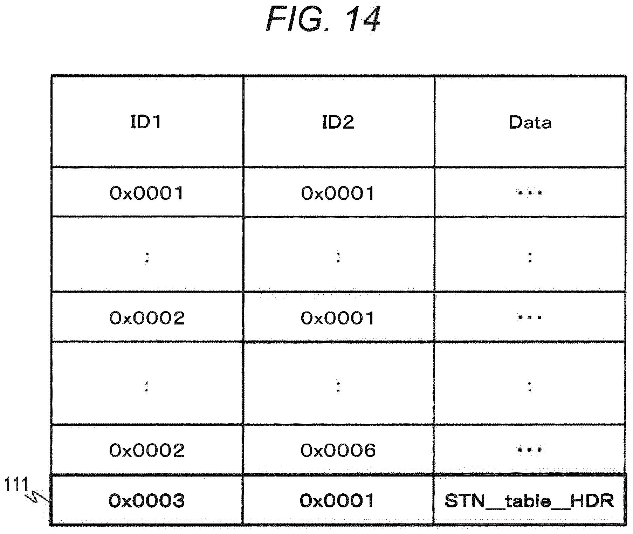

Examples of identifiers set to the extension data identification data field 101 in which the identification information of the extension data is recorded are illustrated in Fig. 14. As illustrated in Fig. 14, an identifier according to a data type is set to the extension data to be recorded in the extension data recording field [ExtensionData()].

As the identification information indicating an HDR-PG data compatible STN table [STN_table_HDR], the following IDs are defined:
ID1 = 0x0003; and
ID2 = 0x0001,
like an entry 111 illustrated in Fig. 14.

Note that, as combinations of the extension data identifiers (ID1 and ID2) that define the types of the extension data, the extension data of the following identifiers (ID1 and ID2) have already been defined:
(ID1, ID2) = (0x0001, 0x0001) to (0x0001, 0x0002); and
(ID1, ID2) = (0x0002, 0x0001) to (0x0002, 0x0006).
ID1 = 0x0003
ID2 = 0x0001

This combination of the IDs is not defined at the current moment, and the identification information (ID1 and ID2) is defined as extension data identification information that indicates that the extension data is the HDR-PG data compatible STN table [STN_table_HDR].

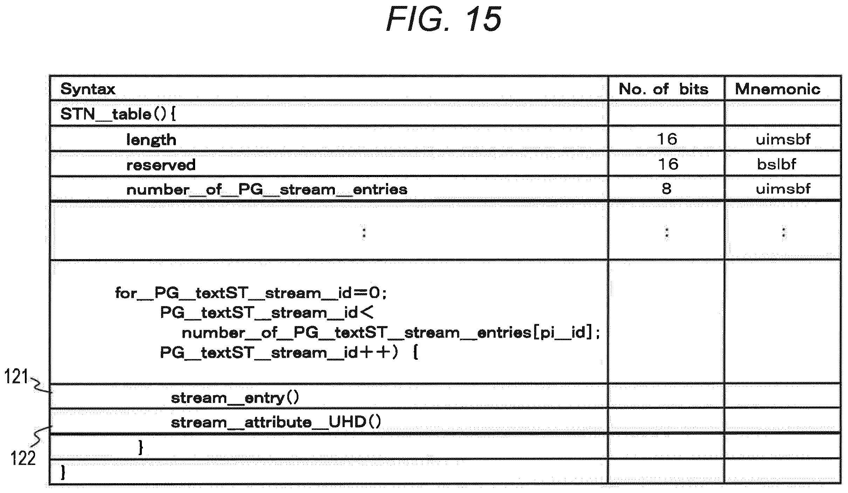

A specific example of the HDR-PG data compatible STN table [STN_table_HDR] to be recorded in the data block 102 will be described with reference to Fig. 15 and subsequent drawings.

Fig. 15 is a diagram of syntax that indicates a data configuration of the HDR-PG data compatible STN table [STN_table_HDR] to be recorded in the extension data recording field [ExtensionDate()] in the playlist file.

This STN table is the table added to and recorded in the playlist file as the STN table corresponding to the HDR-PG data.

In the STN table, video information (HDR-PG video information) regarding the HDR-PG data is recorded.

A packet identifier (PID) of a TS packet in which the HDR-PG stream is stored is recorded in a stream entry recording field [Stream_entry()] 121 illustrated in Fig. 15.

Further, the PG information regarding the HDR-PG data is recorded in a stream attribute information recording field [Stream_attribute_UHD()] 122.

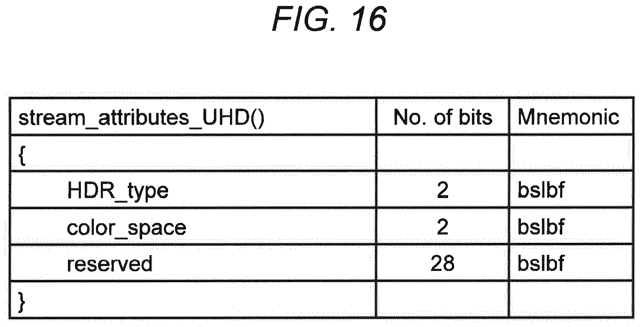

A detailed configuration of the stream attribute information recording field [Stream_attribute_UHD()] 122 is illustrated in Fig. 16. In the stream attribute information recording field [Stream_attribute_UHD()] 122, the following information is recorded:
(1) dynamic range setting information [HDR_type]; and
(2) color gamut setting information [color_space].

A (1) dynamic range setting information [HDR_type] recording field is a field in which data that indicates dynamic range setting information of the video data (HDR-PG data) stored in the clip AV stream file to be reproduced using the playlist is recorded.

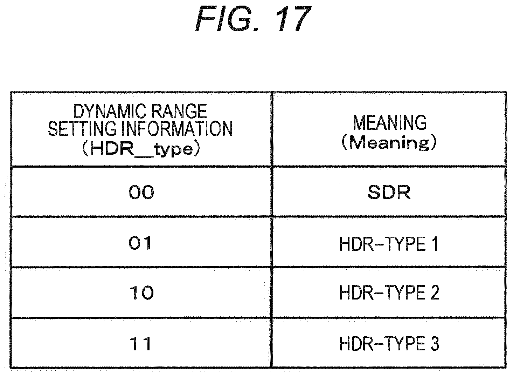

Fig. 17 illustrates an example of data setting to the dynamic range setting information recording field.

As illustrated in Fig. 17, for example,
a set value = 00 indicates that the stored video (HDR-PG data) in the clip AV stream file is the SDR-PG data.

Further, the set value = 01 indicates that the stored video (HDR-PG data) in the clip AV stream file is the HDR-PG data of HDR-type 1.

Note that a plurality of types having different set forms of dynamic range is defined for the HDR videos (HDR-PG data), and there are the HDR videos (HDR-PG data) of different types of the type 1 to a type 3.

Further, the set value = 10 indicates that the stored video (HDR-PG data) in the clip AV stream file is the HDR-PG data of HDR-type 2.

Further, the set value = 11 indicates that the stored video (HDR-PG data) in the clip AV stream file is the HDR-PG data of HDR-type 3.

The reproducing device can confirm the set form of the dynamic range of the presentation graphics (PG) data that configures subtitle data and menu data stored in the clip AV stream file selected as an object to be reproduced with the playlist by reference to the dynamic range setting information recording field.

Further, a color gamut setting information [color_space]recording field in the stream attribute information recording field [Stream_attribute_UHD()] in the STN table illustrated in Fig. 16 is a field in which data that indicates color gamut setting information of the video data (HDR-PG data) stored in the clip AV stream file reproduced using the playlist is recorded.

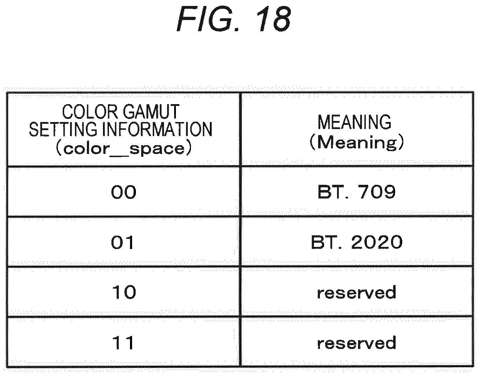

Fig. 18 illustrates an example of data setting to the color gamut setting information recording field.

As illustrated in Fig. 18, for example,
the set value = 00 indicates that color gamut setting of the stored data (PG data) in the clip AV stream fil is color gamut setting that enables an output of a color value corresponding to a color space defined by color space BT. 707.

Further, the set value = 01 indicates that color gamut setting of the stored data (PG data) in the clip AV stream fil is color gamut setting that enables an output of a color value corresponding to a color space defined by color space BT.2020.

Further, the set values = 10 and 11 are set as reserved spaces. The reserved spaces are available when a different color space is used in the future.

The reproducing device can confirm a color gamut set form of the presentation graphics (PG) data that configures the subtitle data and the menu data stored in the clip AV stream file selected as the object to be reproduced with the playlist by reference to the color gamut setting information recording field.

Note that the example of information setting to the stream attribute information recording field [Stream_attribute_UHD()] 122 described with reference to Figs. 16 to 18 is an example, and various types of setting can be performed.

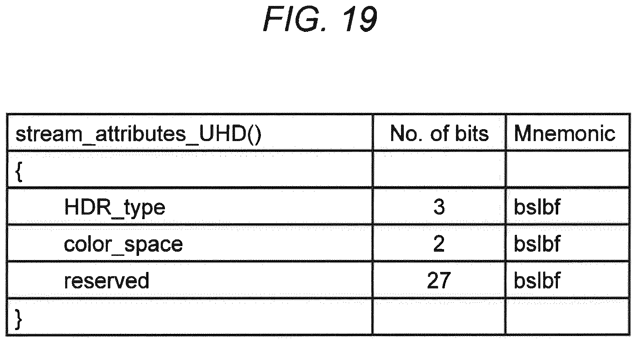

Hereinafter, an embodiment to set information in a different form to the dynamic range setting information [HDR_type] will be described with reference to Fig. 19 and subsequent drawings.

Fig. 15 described above is a diagram of syntax that indicates a data configuration of an ultra high definition [UHD] video compatible STN table [STN_table_UHD] to be recorded in the extension data recording field [ExtensionData()] in the playlist file illustrated in Fig. 13.

As described above, in the ultra high definition [UHD] video compatible STN table [STN_table_UHD] illustrated in Fig. 15, video information regarding an ultra high definition [UHD] video is recorded.

In the stream entry recording field [Stream_entry()] 121 illustrated in Fig. 15, the packet identifier (PID) of a TS packet in which a video stream is stored.

Further, in the stream attribute information recording field [Stream_attribute_UHD()]122, the video information regarding an ultra high definition [UHD] video is recorded.

As described with reference to Fig. 16, in the stream attribute information recording field [Stream_attribute_UHD()] 122, the dynamic range setting information [HDR_type]recording field is set.

An embodiment described below is an example of setting to record 3-bit data to dynamic range setting information [HDR_type] .

A detailed configuration example of a stream attribute information recording field [Stream_attribute_UHD()] 122 according to the present embodiment is illustrated in Fig. 19.

In the stream attribute information recording field [Stream_attribute_UHD()]122, the following information is recorded:
(1) dynamic range setting information [HDR_type]; and
(2) color gamut setting information [color_space], similarly to the example described with reference to Fig. 16.

The (2) color gamut setting information [color_space] is a field in which data that indicates color gamut setting information of video data stored in a clip AV stream file reproduced using a playlist is recorded, as described with reference to Fig. 18.

A (1) dynamic range setting information [HDR_type]recording field is a field in which data that indicates dynamic range setting information of video data (HDR-PG data) stored in the clip AV stream file reproduced using the playlist is recorded.

In the setting example of the stream attribute information recording field [Stream_attribute_UHD()] 122 described with reference to Fig. 16, the dynamic range setting information [HDR_type] stores only 2 bits. However, in the present embodiment, 3-bit data can be stored.

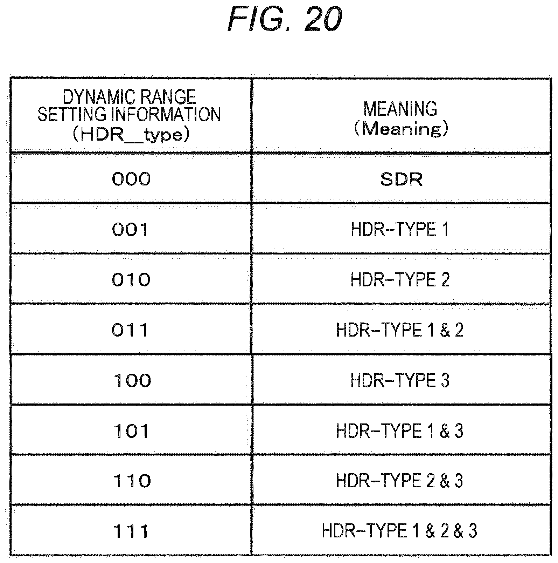

An example of data setting to the dynamic range setting information [HDR_type] recording field in the present embodiment will be described with reference to Fig. 20.

As illustrated in Fig. 20, the 3-bit data set to the dynamic range setting information [HDR_type] recording field is data indicating the following dynamic range setting information.

A set value = 000 indicates that stored video in the clip AV stream file is an SDR video.

The set value = 001 indicates that the stored video in the clip AV stream file is an HDR-type 1 video.

As described above, a plurality of types having different set forms of dynamic range is defined for HDR videos, and there are HDR videos of different types of the type 1 to a type 3.

The set value = 010 indicates that the stored video in the clip AV stream file is an HDR-type 2 video.

The set value = 011 indicates that the stored video in the clip AV stream file is configured from the HDR-type 1 video and the HDR-type 2 video.

The set value = 100 indicates that the stored video in the clip AV stream file is an HDR-type 3 video.

The set value = 101 indicates that the stored video in the clip AV stream file is configured from the HDR-type 1 video and the HDR-type 3 video.

The set value = 110 indicates that the stored video in the clip AV stream file is configured from the HDR-type 2 video and the HDR-type 3 video.

The set value = 111 indicates that the stored video in the clip AV stream file is configured from the HDR-type 1 video, the HDR-type 2 video and the HDR-type 3 video.

A reproducing device can confirm the set form of the dynamic range of the video data stored in the clip AV stream file selected as an object to be reproduced with the playlist by reference to the dynamic range setting information recording field.

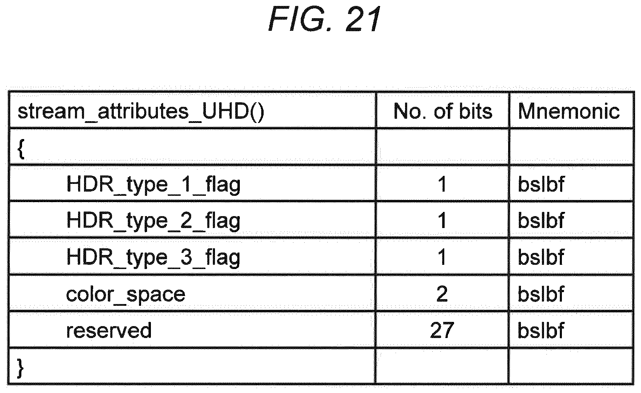

Next, another different data recording example of the dynamic range setting information [HDR_type] to the stream attribute information recording field [Stream_attribute_UHD ()] will be described with reference to Figs. 21 to 22.

Fig. 21 illustrates a configuration example of the stream attribute information recording field [Stream_attribute_UHD()] 122 according to the present embodiment.

That is, Fig. 21 is a diagram illustrating a configuration example of the stream attribute information recording field [Stream_attribute_UHD()] 122 of the ultra high definition [UHD] video compatible STN table [STN_table_UHD] (Fig. 15) recorded in the extension data recording field [ExtensionData()] in the playlist file illustrated in Fig. 13.

In the stream attribute information recording field [Stream_attribute_UHD()] 122, the following information is recorded:
(1) dynamic range setting information [HDR_type]; and
(2) color gamut setting information [color_space], similarly to the example described with reference to Figs. 16 and 19.

The (2) color gamut setting information [color_space] is a field in which data that indicates color gamut setting information of video data stored in a clip AV stream file reproduced using a playlist, as described with reference to Fig. 18.

A (1) dynamic range setting information [HDR_type]recording field is a field in which data that indicates dynamic range setting information of video data (HDR-PG data) stored in the clip AV stream file reproduced using the playlist is recorded.

The dynamic range setting information [HDR_type] recording field in the present embodiment is configured from the following three 1-bit record data fields:
an HDR-type 1 flag [HDR_type_1_flag] recording field;
an HDR-type 2 flag [HDR_type_2_flag]recording field; and
an HDR-type 3 flag [HDR_type_3_flag]recording field.

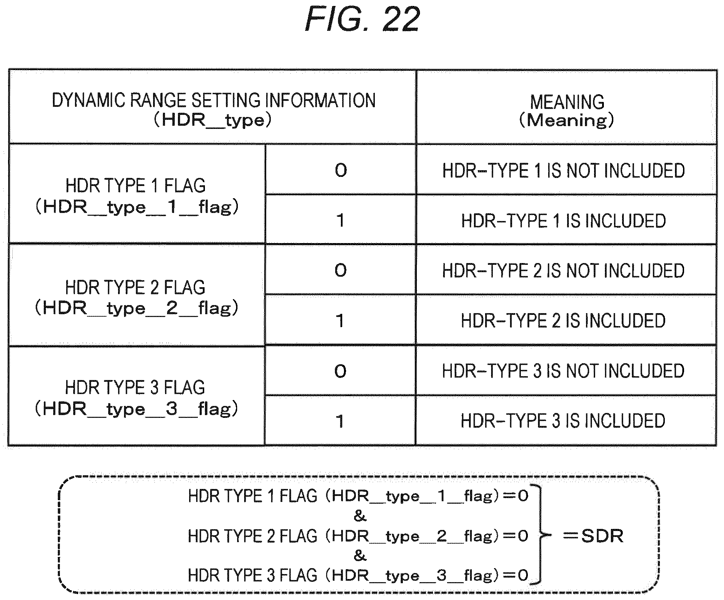

Bit setting to the fields and its meanings will be described with reference to Fig. 22.

As illustrated in Fig. 22, bit values set to the three flag setting fields configured as the dynamic range setting information [HDR_type] recording field are data indicating the following meanings.

The HDR-type 1 flag [HDR_type_1_flag] = 0

This flag set value indicates that an HDR-type 1 video is not included in stored video in the clip AV stream file.

The HDR-type 1 flag [HDR_type_1_flag] = 1

This flag set value indicates that the HDR-type 1 video is included in the stored video in the clip AV stream file.

The HDR-type 2 flag [HDR_type_2_flag] = 0

This flag set value indicates that an HDR-type 2 video is not included in the stored video in the clip AV stream file.

The HDR-type 2 flag [HDR_type_2_flag] = 1

This flag set value indicates that the HDR-type 2 video is included in the stored video in the clip AV stream file.

The HDR-type 3 flag [HDR_type_3_flag] = 0

This flag set value indicates that an HDR-type 3 video is not included in the stored video in the clip AV stream file.

The HDR-type 3 flag [HDR_type_3_flag] = 1

This flag set value indicates that the HDR-type 3 video is included in the stored video in the clip AV stream file.

Note that, in a case of setting where all of the flags of the HDR-types 1 to 3 are 0, the flag set value indicates that the stored video in the clip AV stream file is an SDR video.

In a case of setting where all of the flags of the HDR-types 1 to 3 are 1, the flag set value indicates that the videos of the HDR-types 1 to 3 are included in the stored video in the clip AV stream file.

A reproducing device can confirm a set form of a dynamic range of the video data stored in the clip AV stream file selected as an object to be reproduced with the playlist by reference to the dynamic range setting information recording field.

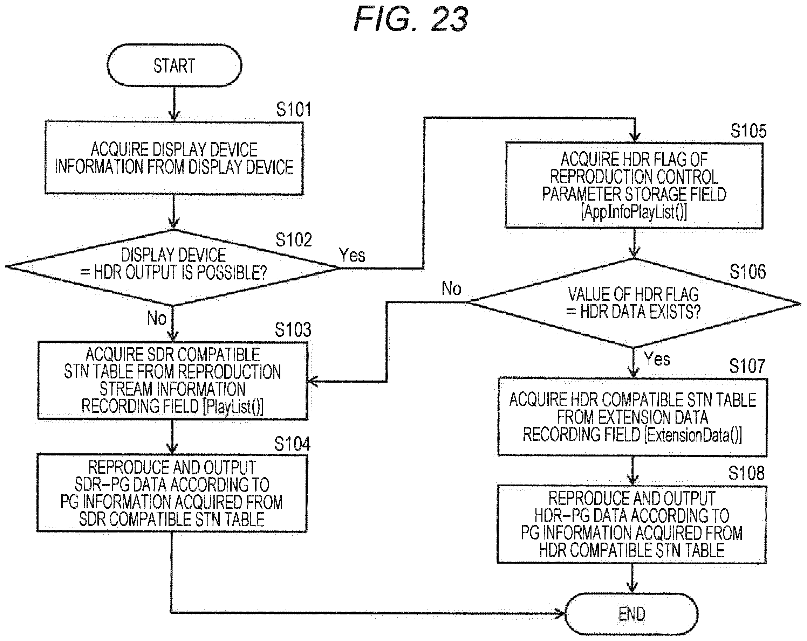

Next, a reproduction sequence of the information processing apparatus (reproducing device) that performs data reproduction, using the playlist file, from a disk on which the playlist file described in the present embodiment 1-1 is recorded, will be described with reference to the flowchart illustrated in Fig. 23.

The flowchart illustrated in Fig. 23 is a flowchart for describing a use sequence in the playlist file at the time of data reproduction.

The present embodiment 1-1 refers to the configuration to add and record the HDR-PG data compatible STN table [STN_table_HDR] in the playlist recorded on the disk.

That is, the present embodiment 1-1 is an embodiment to record another additional STN table to the extension data recording field [ExtensionData ()], in addition to the STN table (for example, the SDR-PG data compatible STN table) recorded in the [PlayList()] as the reproduction stream information recording field in the playlist file.

A data processing unit of the reproducing device executes processing according to the flowchart illustrated in Fig. 23.

The data processing unit of the reproducing device includes a data processing unit including a CPU and the like having a program execution function, and executes processing according to a flow illustrated in Fig. 23 according to a program stored in a storage unit in advance. Processing of steps of the flow illustrated in Fig. 23 will be described in order.

### (Step S101)

First, the reproducing device acquires display device information from the display device connected to the reproducing device. For example, the reproducing device acquires the display device information including the dynamic range information (whether HDR compatible or HDR incompatible) displayable by the display device, the color gamut information (whether BT.707 compatible or BT.2020 compatible) that can be output, and the like by communication through the HDMI (registered trademark) cable.

### (Step S102)

In step S102, the reproducing device determines whether the display device is HDR compatible on the basis of the display device information acquired from the display device in step S101.

In a case where the display device is the HDR incompatible display device such as the SDR television, the determination of step S102 is No, and the processing proceeds to step S103.

Meanwhile, when the connected display device has been confirmed to be the HDR compatible display device such as the HDR television, the determination of step S102 is Yes, and the processing proceeds to step S105.

### (Step S103)

In step S102, when the display device connected to the reproducing device has been confirmed to be the HDR incompatible display device, in step S103, the SDR compatible STN table is acquired from the reproduction stream information recording field [PlayList()] in the playlist file.

In this STN table, the video information regarding the SDR-presentation graphics (PG) data stored in the clip AV stream file to be reproduced with the playlist file is recorded.

That is, the video information (PG information) regarding the presentation graphics (PG) data that configures the subtitle data and the menu data is recorded.

The PG information recorded in the STN table is information such as dynamic range setting information and color gamut setting information, similar to those described with reference to Figs. 16 to 22.

### (Step S104)

The reproducing device executes processing of reproducing the SDR-PG data (the subtitle data and the menu data) acquired from the clip AV stream file and outputting the data to the display device according to the PG information recorded in the SDR compatible STN table acquired from the reproduction stream information recording field [PlayList ()] in the playlist file in step S103.

The processing of the series of steps S102 (No) to S103 to S104 is executed as processing of outputting the SDR video to the HDR incompatible display device such as the SDR television connected to the reproducing device.

That is, an output of the SDR video (PG data) according to the display function of the display device such as the SDR television is performed, and a video output adapted to the display device is executed.

### (Step S105)

Meanwhile, when the display device connected to the reproducing device has been confirmed to be the HDR compatible display device in step S102, the reproducing device performs processing of step S105.

In step S105, the reproducing device acquires a set value of an HDR flag set to a reproduction control parameter storage field [AppInfoPlayList()] in the playlist file.

Note that, in the reproduction control parameter storage field [AppInfoPlayList ()] of the playlist file, the flag (HDR flag) that indicates whether the HDR video (HDR-PG data) is included in the data to be reproduced with the playlist is recorded.

For example, the following flag with setting is set:
a flag set value = 1: the HDR video (HDR-PG data) is included in the data to be reproduced with the playlist; or
a flag set value = 0: the HDR video (HDR-PG data) is not included in the data to be reproduced with the playlist.

The data processing unit of the reproducing device confirms the set value of the flag, and can determine whether the HDR video (HDR-PG data) is included in the data to be reproduced with the playlist.

### (Step S106)

The reproducing device determines whether the set value of the HDR flag acquired in step S105 is the value that indicates that the HDR video (HDR-PG data) is included or not in the data to be reproduced with the playlist.

When the flag set value is the value that indicates that the HDR video (HDR-PG data) is included in the data to be reproduced with the playlist, the processing proceeds to step S107.

When the flag set value is the value that indicates that the HDR video (HDR-PG data) is not included in the data to be reproduced with the playlist, the processing proceeds to step S103.

When the flag set value is the value that indicates that the HDR video (HDR-PG data) is not included in the data to be reproduced with the playlist, and the processing proceeds to step S103, the processing of steps S103 and S104 is executed.

That is, the SDR compatible STN table is acquired from the reproduction stream information recording field [PlayList()] in the playlist file, and reproduction and an output of the SDR video (SDR-PG data) is executed according to the acquired SDR compatible STN table.

### (Step S107)

When the flag set value is the value that indicates that the HDR video (HDR-PG data) is included in the data to be reproduced with the playlist in the processing of confirming the HDR flat set value in step S106, the processing proceeds to step S107.

In step S107, the reproducing device acquires the HDR compatible STN table from the extension data recording field [ExtensionData()] in the playlist file.

In this STN table, the video information regarding the HDR video (HDR-PG data) in the clip AV stream file that stores the HDR video (HDR-PG data) to be reproduced with the playlist file, that is, attribute information regarding the HDR graphics data is recorded.

The attribute information regarding the HDR graphics data recorded in the STN table is information such as the dynamic range setting information and the color gamut setting information, as described with reference to Figs. 16 to 22.

### (Step S108)

The reproducing device executes processing of reproducing the HDR-PG data (the subtitle data and the menu data) acquired from the clip AV stream file, and processing of outputting the data to the display device according to the attribute information regarding the HDR graphics data recorded in the HDR compatible STN table acquired from the extension data recording field [ExtensionData()] in the playlist file in step S107.

The processing according to the series of steps S102 (Yes) to S105 to S106 (Yes) to S107 to S108 is executed as processing of outputting the HDR video (HDR-PG data) to the HDR compatible display device such as the HDR television connected to the reproducing device.

That is, an output of the HDR-PG data such as the subtitle data and the menu data according to the display function of the display device such as the HDR television is performed, and an output of the PG data adapted to the display device is executed.

Note that, in the flowchart illustrated in Fig. 23, the processing has been set to outputting the PG data of either the HDR-PG data (HDR graphics data) or the SDR-PG data (SDR graphics data) to the display device. However, for example, in a case where the PG data included in the content recorded on the disk is only the HDR-PG data, and the display device connected to the reproducing device is HDR incompatible (the SDR television or the like), the reproducing device may perform processing of converting the HDR-PG data (HDR graphics data) into the SDR-PG data (SDR graphics data) and outputting the data. Alternatively, the processing may be set to generating and outputting a message notifying that a normal output cannot be performed.

Further, in the flowchart illustrated in Fig. 23, the example of executing the selective reproduction processing of the SDR-PG data and the HDR-PG data has been described. However, this is an example, and for example, selection and reproduction processing of the following data having different setting can be also executed according to the flow illustrated in Fig. 23:
(1) AVC content compatible PG data and HEVC content compatible PG data;
(2) 2K content (1920 × 1080 pixels) compatible PG data and 4K content (3840 × 2160 pixels) compatible PG data; and
(3) content compatible PG data of the color gamut = BT.707 and content compatible PG data of the color gamut = Bt.2020.

In this case, processing in which "SDR" and "HDR" described in the flow illustrated in Fig. 23 are replaced as follows may just be executed:
(1) "SDR" → "AVC" and "HDR" → "HEVC";
(2) "SDR" → "2K" and "HDR" → "4K"; and
(3) "SDR" → "BT.707" and "HDR" → "BT.2020".

### [4-2. (Embodiment 1-2) Embodiment to record video information (attribute information) of presentation graphics (PG) data in reproduction stream information recording field [PlayList()] of playlist file]]

Next, as an embodiment 1-2, an embodiment to record video information (attribute information) of presentation graphics (PG) data in reproduction stream information recording field [PlayList()] of playlist file will be described.

As described with reference to Fig. 12, in a playlist file, the following four substance data recording fields are set:
(1) [AppInfoPlayList()] as a reproduction control parameter storage field in which a reproduction control parameter and the like are stored;
(2) [PlayList()] as a reproduction stream information recording field in which stream information of data to be reproduced in units of a play item included in the playlist is recorded;
(3) [PlayListMark()] as a mark information recording field in which reproduction starting position information such as an entry mark used for chapter search is recorded is recorded; and
(4) [ExtensionData()] as an extension data recording field in which various types of extension data can be recorded.

The embodiment 1-2 described below is an embodiment to record HDR-PG data compatible video information (attribute information) in a reproduction stream information recording field [PlayList ()] in which stream information of data to be reproduced in units of a play item included in a playlist and the like are recorded.

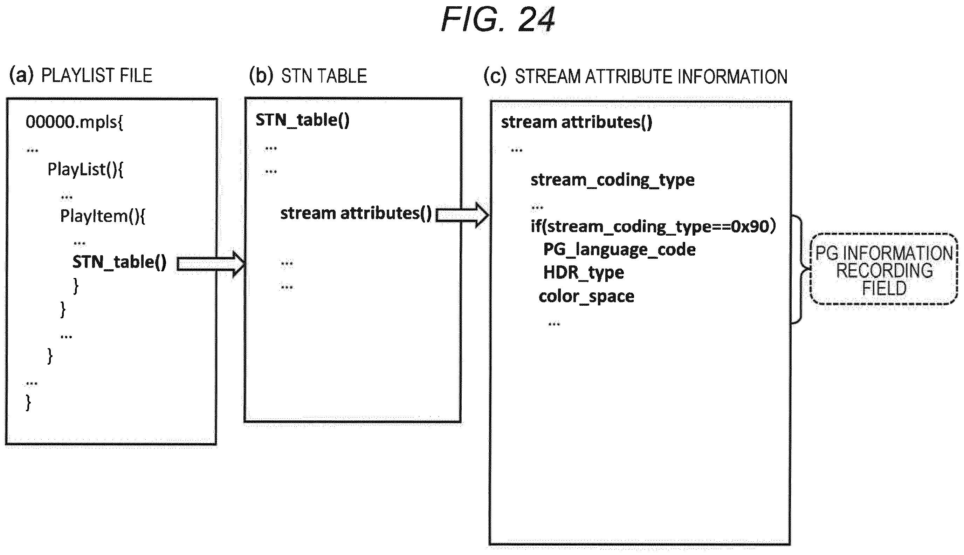

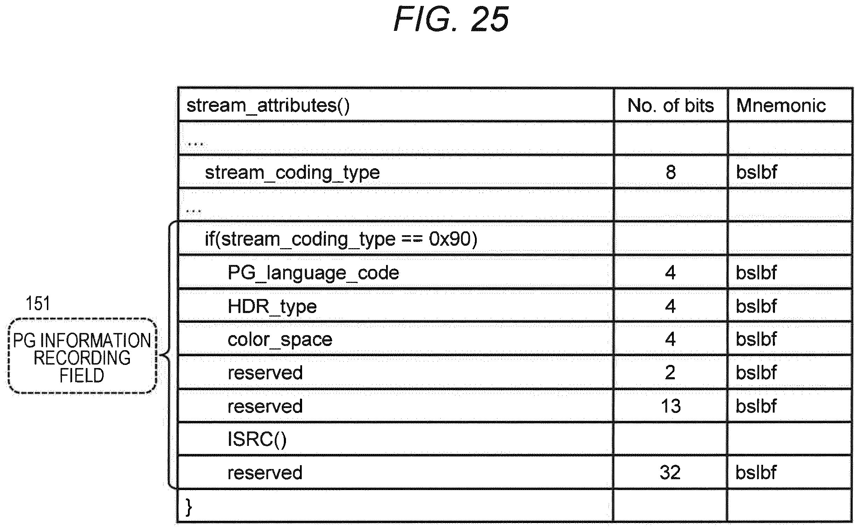

An HDR-PG data compatible video information (attribute information) recording configuration will be described with reference to Figs. 24 and 25.

Figs. 24 (a) to 24 (c) illustrate the following drawings:
(a) a playlist file;
(b) an STN table to be recorded in a reproduction stream information recording field [PlayList ()] in the playlist file; and
(c) a stream attribute information recording field [stream_attributes ()] as a field in which video (PG) attribute information in units of a stream coding type [Stream_coding_type] to be recorded in the STN table is recorded.

In the present embodiment, PG information as attribute information regarding presentation graphics (PG) data that configures a subtitle and a menu is recorded in the stream attribute information recording field [stream_attributes ()] as a field in which video attribute information in units of the stream coding type [Stream_coding_type] recorded in the STN table illustrated in Fig. 24(c).

The PG information recording field illustrated in Fig. 24(c) is described.

In the PG information recording field illustrated in Fig. 24 (c), the stream coding type [Stream_coding_type] = 0x90, that is, a value [0x90] that indicates that the stream coding type is related to presentation graphics (PG) is recorded. After the recording field of the stream coding type [Stream_coding_type] = 0x90, PG information (language, an HDR type, color gamut (color space) information, and the like) regarding the PG data such as a subtitle and a menu is recorded.

A detailed configuration example of the PG information recording field recorded in the reproduction stream information recording field [PlayList ()] in the playlist file is illustrated in Fig. 25.

Fig. 25 is syntax that indicates details of an HEVC video information recording field illustrated in Fig. 24(c).

In a PG information recording field 151 illustrated in Fig. 25, the attribute information regarding the PG data such as a subtitle or a menu reproducible by application in the playlist file is recorded.

To be specific, the following video information is recorded:
(1) a language code (PG_language_code);
(2) dynamic range setting information (HDR_type);
(3) color gamut setting information (color_space); and
(4) content production information (ISRC()).

In the (1) language code (PG_language_code), language of subtitle data and menu data, that is, a language identifier that identifies language such as Japanese, English, or French is recorded.

In the (2) dynamic range setting information (HDR_type), information similar to the dynamic range information described with reference to Fig. 17 is recorded. For example, the following values are recorded:
a set value = 00: indicates that data (subtitle data and menu data) stored in a clip AV stream file in which data to be reproduced with the playlist file is stored is SDR-PG;
the set value = 01: indicates that the data (the subtitle data and the menu data) stored in the clip AV stream file in which data to be reproduced with the playlist file is stored is PG data of an HDR-type 1;
The set value = 10: indicates that the data (the subtitle data and the menu data) stored in the clip AV stream file in which data to be reproduced with the playlist file is stored is PG data of an HDR-type 2; and
The set value = 11: indicates that the data (the subtitle data and the menu data) stored in the clip AV stream file in which data to be reproduced with the playlist file is stored is PG data of an HDR-type 3.

Alternatively, a configuration to set the bit information described with reference to Fig. 20 or 22 may be employed as a configuration in which a dynamic range setting information (HDR_type) recording field can store 3-bit data.

In the (3) color gamut setting information (color_space), information similar to the color gamut setting information described with reference to Fig. 18. For example, the following values are recorded:
the set value = 00: indicates that color gamut setting of the stored data (the subtitle data and the menu data) in the clip AV stream file in which the data to be reproduced with the playlist file is stored is color gamut setting that enables an output of a color value corresponding to a color space defined by a color space BT.707; and
the set value = 01: indicates that color gamut setting of the stored data (the subtitle data and the menu data) in the clip AV stream file in which the data to be reproduced with the playlist file is stored is color gamut setting that enables an output of a color value corresponding to a color space defined by a color space BT. 2020.

In the (4) content production information (ISRC()), content production related information such as a country and an organization who have produced content to be reproduced with the playlist file, and date and time when the content to be reproduced was produced is recorded.

As described above, in the present embodiment 1-2, the PG information as the HDR-PG data compatible video information (attribute information) as HDR subtitle data and HDR menu data is recorded in the reproduction stream information recording field [PlayList()] in which stream information of the data to be reproduced in units of a play item included in the playlist is recorded.

A reproducing device can determine whether the PG data adaptable to a display device connected to the reproducing device by reference to the video information (PG information), and execute processing of selecting and reproducing the PG data adapted to the connected display device, and processing of converting the PG data into PG data that can be output to the connected reproducing device and outputting the data.

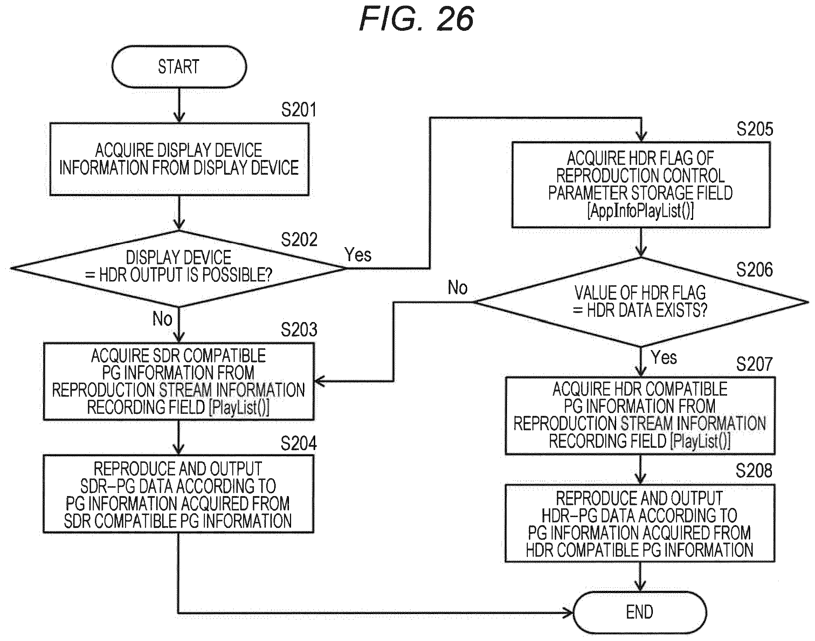

Next, a reproduction sequence of an information processing apparatus (reproducing device) that performs data reproduction, using the playlist file, from a disk on which the playlist file described in the present embodiment 1-2 is recorded, will be described with reference to the flowchart illustrated in Fig. 26.

The flowchart illustrated in Fig. 26 is a flowchart for describing a use sequence in the playlist file at the time of data reproduction.

The present embodiment 1-2 refers to the configuration to record the HDR-PG data compatible video information in the reproduction stream information recording field [PlayList ()] of the playlist recorded on the disk.

A data processing unit of the reproducing device executes processing according to the flowchart illustrated in Fig. 26.

The data processing unit of the reproducing device includes a data processing unit including a CPU and the like having a program execution function, and executes processing according to a flow illustrated in Fig. 26 according to a program stored in a storage unit in advance. Processing of steps of the flow illustrated in Fig. 26 will be described in order.

### (Step S201)

First, the reproducing device acquires display device information from the display device connected to the reproducing device. For example, the reproducing device acquires the display device information including the dynamic range information (whether HDR compatible or HDR incompatible) displayable by the display device, the color gamut information (whether BT.707 compatible or BT.2020 compatible) that can be output, and the like by communication through the HDMI (registered trademark) cable.

### (Step S202)

In step S202, the reproducing device determines whether the display device is HDR compatible on the basis of the display device information acquired from the display device in step S201.

In a case where the display device is the HDR incompatible display device such as the SDR television, the determination of step S202 is No, and the processing proceeds to step S203.

Meanwhile, when the connected display device has been confirmed to be the HDR compatible display device such as the HDR television, the determination of step S202 is Yes, and the processing proceeds to step S205.

### (Step S203)

In step S202, when the display device connected to the reproducing device has been confirmed to be the HDR incompatible display device, in step S203, the SDR compatible PG information is acquired from the reproduction stream information recording field [PlayList ()] in the playlist file. This PG information is acquired from the STN table of the reproduction stream information recording field [PlayList ()] in the playlist file.

For example, the PG information is information recorded in the PG information recording field illustrated in Fig. 24(c).

In the PG information recording field illustrated in Fig. 24(c), the PG information regarding the SDR-PG data in the clip AV stream file that stores the SDR-PG to be reproduced with the playlist file.

The PG information includes the following information, similar to those described with reference to Fig. 25:
(1) the language code (PG_language_code);
(2) the dynamic range setting information (HDR_type);
(3) the color gamut setting information (color_space); and
(4) the content production information (ISRC()).

### (Step S204)

The reproducing device executes processing of reproducing the SDR-PG data such as the SDR subtitle and the SDR menu acquired from the clip AV stream file and processing of outputting the data to the display device, according to the SDR compatible PG information acquired from the reproduction stream information recording field [PlayList ()] in the playlist file in step S203.

The processing of the series of steps S202 (No) to S203 to S204 is executed as processing of outputting the SDR video to the HDR incompatible display device such as the SDR television connected to the reproducing device.

That is, an SDR-PG output according to the display function of the display device such as the SDR television, and a PG data output of the subtitle and the menu adapted to the display device is executed.

### (Step S205)

Meanwhile, when the display device connected to the reproducing device has been confirmed to be the HDR compatible display device in step S202, the reproducing device performs processing of step S205.

In step S205, the reproducing device acquires a set value of an HDR flag set to a reproduction control parameter storage field [AppInfoPlayList()] in the playlist file.

Note that, in the reproduction control parameter storage field [AppInfoPlayList ()] of the playlist file, the flag (HDR flag) that indicates whether the HDR video (HDR-PG data) is included in the data to be reproduced with the playlist is recorded.

For example, the following flag with setting is set:
a flag set value = 1: the HDR video (HDR-PG data) is included in the data to be reproduced with the playlist; or
a flag set value = 0: the HDR video (HDR-PG data) is not included in the data to be reproduced with the playlist.

The data processing unit of the reproducing device confirms the set value of the flag, and can determine whether the HDR video (HDR-PG data) is included in the data to be reproduced with the playlist.

### (Step 206)

The reproducing device determines whether the set value of the HDR flag acquired in step S205 is the value that indicates that the HDR video (HDR-PG data) is included or not in the data to be reproduced with the playlist.

When the flag set value is the value that indicates that the HDR video (HDR-PG data) is included in the data to be reproduced with the playlist, the processing proceeds to step S207.

When the flag set value is the value that indicates that the HDR video (HDR-PG data) is not included in the data to be reproduced with the playlist, the processing proceeds to step S203.

When the flag set value is the value that indicates that the HDR video (HDR-PG data) is not included in the data to be reproduced with the playlist, and the processing proceeds to step S203, the processing of steps S203 and S204 is executed.

That is, the SDR compatible PG information is acquired from the reproduction stream information recording field [PlayList()] in the playlist file, and reproduction and an output of the SDR video (SDR-PG data) is executed according to the acquired SDR compatible PG information.

### (Step S207)

When the flag set value is the value that indicates that the HDR video (HDR-PG data) is included in the data to be reproduced with the playlist in the processing of confirming the HDR flat set value in step S206, the processing proceeds to step S207.

In step S207, the reproducing device acquires the HDR compatible PG information from the reproduction stream information recording field [PlayList ()] in the playlist file. The video information is acquired from the STN table of the reproduction stream information recording field [PlayList ()] in the playlist file.

For example, the video information is information recorded in the PG information recording field illustrated in Fig. 24(c) and Fig. 25.

As described with reference to Fig. 25, in the PG information recording field, the following information is recorded as the attribute information regarding the HDR-PG data in the clip AV stream file that stores the HDR-PG data (HDR graphics data) to be reproduced with the playlist file:
(1) the language code (PG_language_code);
(2) the dynamic range setting information (HDR_type);
(3) the color gamut setting information (color_space); and
(4) the content production information (ISRC())

### (Step S208)

The reproducing device executes processing of reproducing the HDR-PG data such as the HDR subtitle data and the HDR menu data acquired from the clip AV stream file and processing of outputting the data to the display device, according to the HDR compatible PG information acquired from the reproduction stream information recording field [PlayList()] of the playlist file in step S207, that is, attribute information of the HDR graphics data.

The processing according to the series of steps S202 (No) to S205 to S206 (Yes) to step S207 to S208 is executed as processing of outputting the HDR-PG data to the HDR compatible display device such as the HDR television connected to the reproducing device.

That is, an output of the HDR data according to the display function of the display device such as the HDR television is performed, and an output of the PG data such as the subtitle and the menu adapted to the display device is executed.

Note that, in the flowchart illustrated in Fig. 26, the processing has been set to outputting the PG data of either the HDR-PG data (HDR graphics data) or the SDR-PG data (SDR graphics data) to the display device. However, for example, in a case where the PG data included in the content recorded on the disk is only the HDR-PG data, and the display device connected to the reproducing device is HDR incompatible (the SDR television or the like), the reproducing device may perform processing of converting the HDR-PG data (HDR graphics data) into the SDR-PG data (SDR graphics data) and outputting the data. Alternatively, the processing may be set to generating and outputting a message notifying that a normal output cannot be performed.

Further, in the flowchart illustrated in Fig. 26, the example of executing the selective reproduction processing of the SDR-PG data and the HDR-PG data has been described. However, this is an example, and for example, selection and reproduction processing of the following content having different setting can be also executed according to the flow illustrated in Fig. 26:
(1) AVC content compatible PG data and HEVC content compatible PG data;
(2) 2K content (1920 × 1080 pixels) compatible PG data and 4K content (3840 × 2160 pixels) compatible PG data; and
(3) content compatible PG data of the color gamut = BT.707 and content compatible PG data of the color gamut = Bt.2020.

In this case, processing in which "SDR" and "HDR" described in the flow illustrated in Fig. 26 are replaced as follows may just be executed:
(1) "SDR" → "AVC" and "HDR" → "HEVC";
(2) "SDR" → "2K" and "HDR" → "4K"; and
(3) "SDR" → "BT.707" and "HDR" → "BT.2020".

### [5. Embodiment to record video information (attribute information) of presentation graphics (PG) data in clip information file]

Next, as an embodiment 2, an embodiment to record video information (attribute information) of presentation graphics (PG) data in a clip information file will be described.

As described with reference to Figs. 5 and 6, the clip information file is a file set in association with a clip AV stream file as a storage file of reproduction content, and in which reproduction control information such as reproduction position information of content is stored.

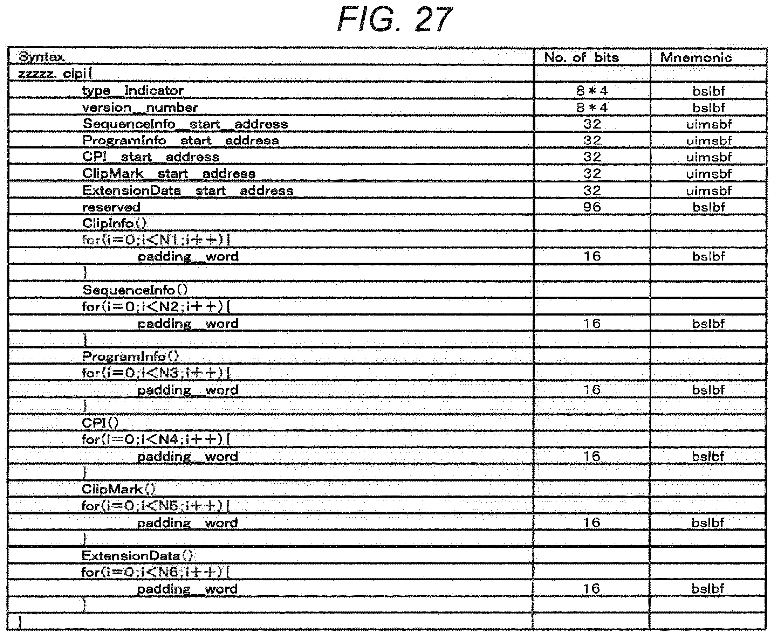

Fig. 27 is syntax that indicates a data configuration of one clip information file.

As illustrated in Fig. 27, in the clip information file, type information [type_indicator] that indicates a file type is recorded, and after that start address information recording fields [SequenceInfoStartAddress] to [ExtensionDataStartAddress] of substance data are set.

After that, recording fields of various substance data are set.

A clip information recording field [ClipInfo()] to an extension data recording field [ExtensionData()] are substance data recording fields in which substantial content to be recorded in the clip information file is recorded. That is, information regarding a stream necessary in reproducing an actual stream is recorded.

In the recording fields of the substance data, the following fields are set:
(1) a clip information recording field [ClipInfo ()] in which attribute information of clip such as clip stream type information and application type information is recorded;
(2) a sequence information recording field [Sequencelnfo()] in which sequence information such as time management information in reproduction processing is mainly recorded;
(3) a program information recording field [ProgramInfo ()] in which program information such as identification information of a program map table, and the number of streams in a program stream is recorded;
(4) a CPI recording field [CPI ()] in which an EP map to which an entry point (EP) of a presentation timestamp (PTS) of an I picture is set is recorded, for example;
(5) a clip mark recording field [ClipMark()] currently set to a reserved field; and
(6) [ExtensionData ()] as an extension data recording field in which various extension data are recordable.

As embodiments to record attribute information (PG information regarding PG data as subtitle data and menu data in a clip information file, video information recording examples using the following two fields will be described in order:
(Embodiment 2-1) an embodiment to record video information (attribute information) of PG data in an extension data recording field [ExtensionData ()] in a clip information file; and
(Embodiment 2-2) an embodiment to record video information (attribute information) of PG data in a program information recording field [ProgramInfo ()] in a clip information file.

### [5-1. (Embodiment 2-1) Embodiment to record video information (attribute information) of presentation graphics (PG) data in extension data recording field [ExtensionData()] of clip information file]

First, an embodiment to record video information (attribute information) information of presentation graphics (PG) in an extension data recording field [ExtensionData()] in a clip information file will be described.

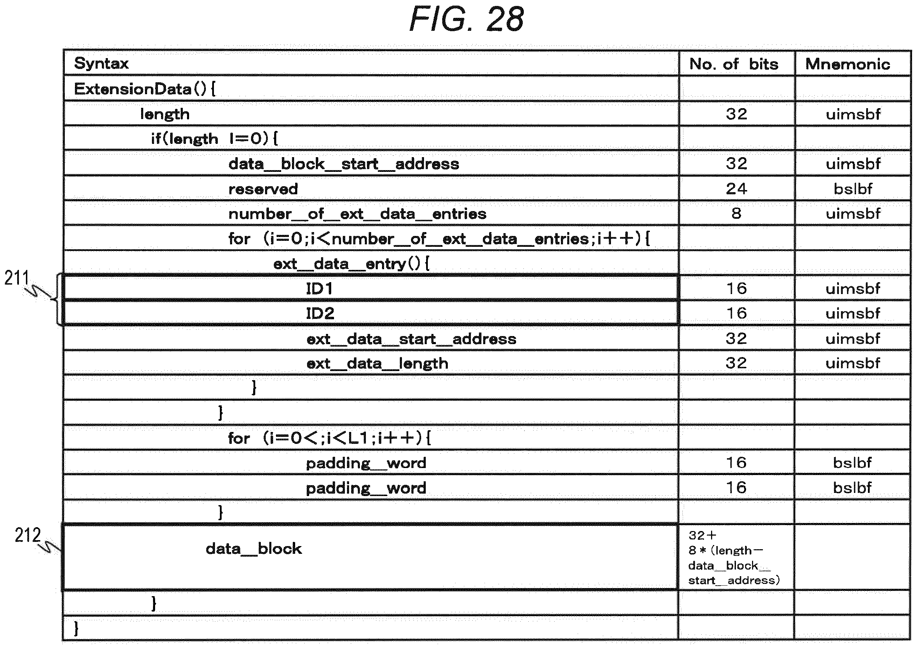

Fig. 28 is syntax indicating a data configuration of the extension data recording field [ExtensionData ()] in the clip information file.

In the extension data recording field [ExtensionData ()], various extension data, which cannot be described in other fields in the clip information file, can be recorded.

Note that various extension data are recorded in the extension data recording field [ExtensionData()], and thus an extension data identification data field 211 in which identification information of extension data is recorded is set.

The extension data defined with identifiers (ID1 and ID2) recorded in the extension data identification data field 211 is recorded in a data block 212.

In the present embodiment, the extension data recorded in the data block 212 is, for example, program information [ProgramInfo_HDR] in which attribute information (PG information) regarding HDR-PG data as HDR subtitle data and HDR menu data are recorded.

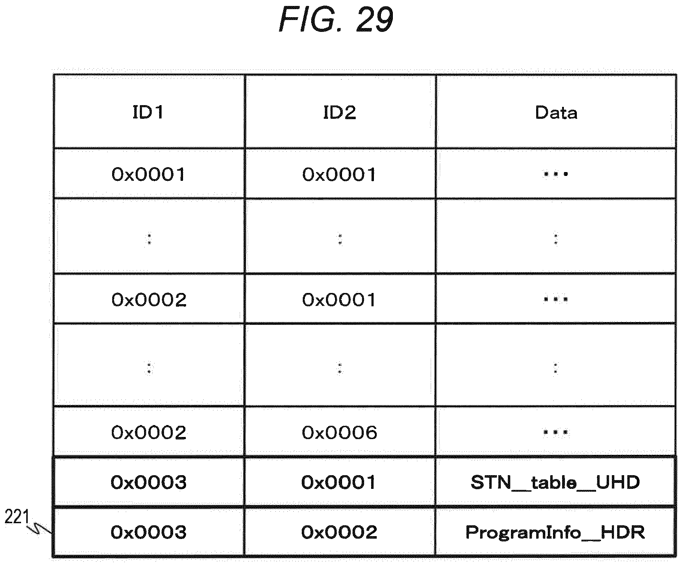

As illustrated in Fig. 29, as the identification information that indicates that the extension data recorded in the extension data recording field [ExtensionData()] is HDR-PG data compatible program information [ProgramInfo_HDR], the following IDs are defined:
ID1 = 0x0003; and
ID2 = 0x0002,
like an entry 221 illustrated in Fig. 29.

Note that, as combinations of the extension data identifiers (ID1 and ID2) that define types of the extension data, the extension data of the following identifiers (ID1 and ID2) have already been defined:
(ID1, ID2) = (0x0001, 0x0001) to (0x0001, 0x0002); and
(ID1, ID2) = (0x0002, 0x0001) to (0x0002, 0x0006).

Further, as described with reference to Fig. 14 in the above-described embodiment 1,
ID1 = 0x0003, and
ID2 = 0x0001
have been newly defined.

This combination of the IDs of the entry 221 illustrated in Fig. 29 is not defined at the current moment, and the identification information (ID1 and ID2) is defined as extension data identification information that indicates that the extension data is the HDR-PG data compatible program information [ProgramInfo_HDR].

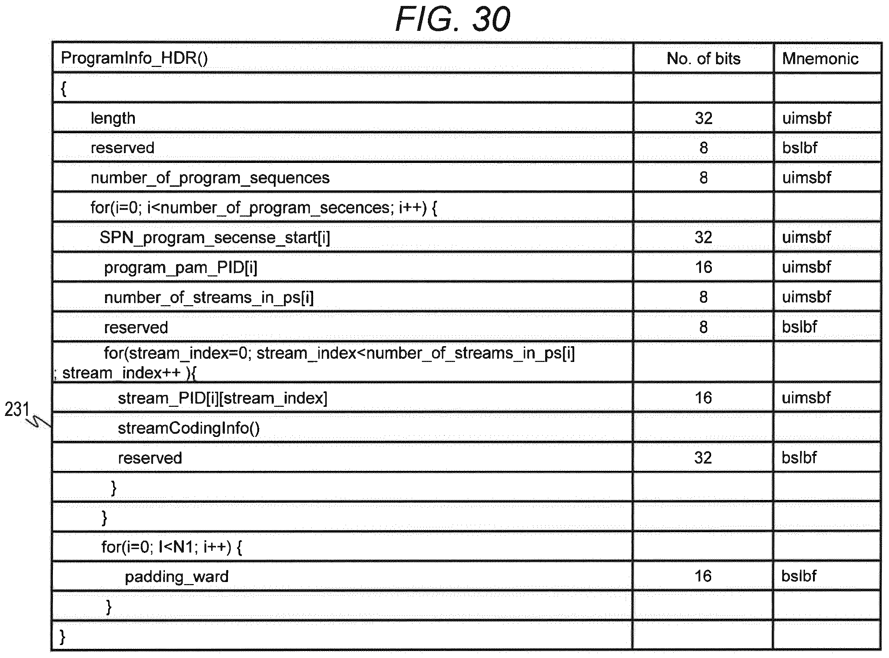

HDR-PG compatible program information [ProgramInfo_HDR] recorded in the data block 212 will be described with reference to Fig. 30 and subsequent drawings.

Fig. 30 is a diagram of syntax that indicates a data configuration of the HDR-PG compatible program information [ProgramInfo_HDR] recorded in the extension data recording field [ExtensionDate()] in the clip information file.

This program information [ProgramInfo_HDR] is data added to and recorded in the clip information file as program information [ProgramInfo_HDR] corresponding to HDR-PG data such as HDR subtitle data and HDR menu data.

In the program information [ProgramInfo_HDR], attribute information regarding the HDR-PG data is recorded.

Note that, in a program information recording field [ProgramInfo ()] originally set to the clip information file illustrated in Fig. 27, video information corresponding to SDR-PG data is recorded, for example.

In the present embodiment, another HDR-PG compatible program information [ProgramInfo ()] is added to the extension data recording field, other than the program information recording field [ProgramInfo ()] originally set to the clip information file.

That is, two pieces of program information are recorded in the clip information file in the present embodiment.

In the program information recording field [ProgramInfo ()] originally set to the clip information file, attribute information regarding the SDR-PG data is recorded, for example .

Further, in the program information recording field [ProgramInfo ()] added to and recorded in the extension data recording field [ExtensionData ()] in the clip information file, the attribute information regarding the HDR-PG data is recorded.

The program information recording field [ProgramInfo ()] illustrated in Fig. 30 is HDR-PG compatible program information recording field [ProgramInfo ()] added to and recorded in the extension data recording field, and video information (attribute information) regarding the HDR-PG data is recorded in a stream encoding information recording field [StreamCodingInfo()] 231 of the HDR-PG compatible program information recording field [ProgramInfo ()].

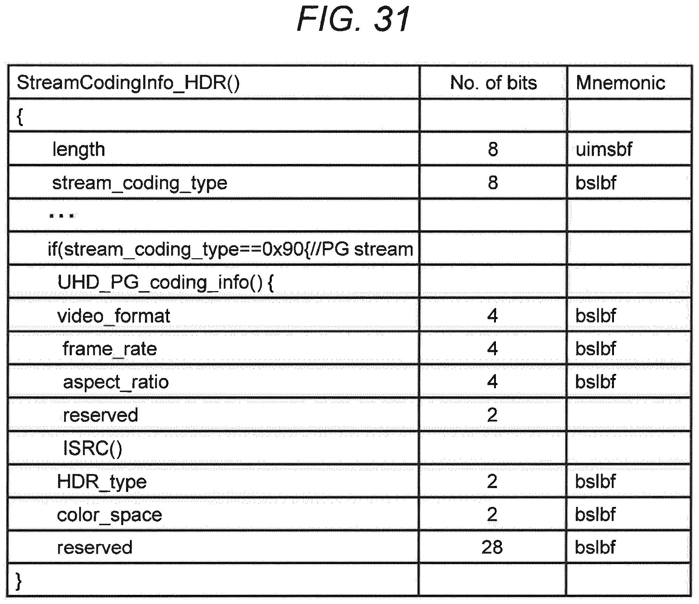

A detailed configuration of the stream encoding information recording field [StreamCodingInfo()] 231 is illustrated in Fig. 31.

In the stream encoding information recording field [StreamCodingInfo()] 231, the following information is recorded, for example:
(1) stream encoding information (UHD_PG_coding_type);
(2) a video format (video_format);
(3) a frame rate (frame_rate);
(4) an aspect ratio (aspect_ratio);
(5) content production information (ISRC());
(6) dynamic range setting information (HDR_type); and
(7) color gamut setting information (color_space).

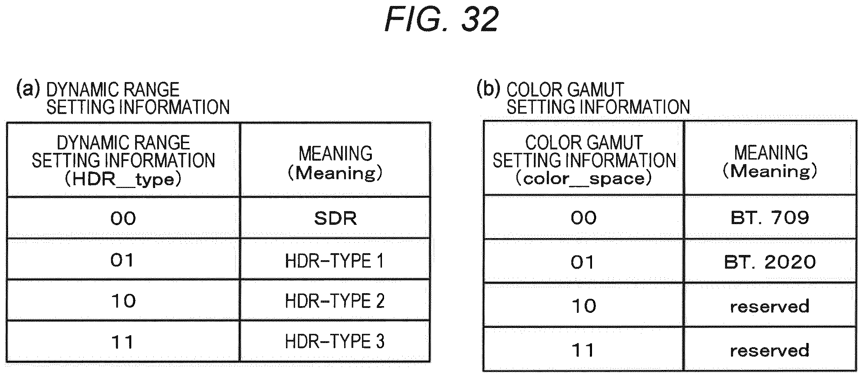

Data value setting examples of the (6) dynamic range setting information (HDR_type) and the (7) color gamut setting information (color_space) will be described with reference to Figs. 32(a) and 32(b).

The other data (2) to (5) are similar data to those described with reference to Fig. 25 in the embodiment 1, and thus description is omitted.

Figs. 32 (a) and 32 (b) illustrate a correspondence table of set values and specific meanings of:
(a) dynamic range setting information (HDR_type); and
(b) color gamut setting information (color_space).

Note that these pieces of information are similar data to those described with reference to Figs. 17 to 22 in the embodiment 1.

Meanings of the set values of (a) dynamic range setting information (HDR_type) are as follows:
the set value = 00 indicates that the stored video (HDR-PG data) in the clip AV stream file is the SDR-PG data;
the set value = 01 indicates that the stored video (HDR-PG data) in the clip AV stream file is the HDR-PG data of HDR-type 1;
the set value = 10 indicates that the stored video (HDR-PG data) in the clip AV stream file is the HDR-PG data of HDR-type 2; and
the set value = 11 indicates that the stored video (HDR-PG data) in the clip AV stream file is the HDR-PG data of HDR-type 3.

A reproducing device can confirm a set form of a dynamic range of the PG data stored in the clip AV stream file selected as an object to be reproduced with the clip information file by reference to the dynamic range setting information recording field.

Alternatively, a configuration to set the bit information described with reference to Fig. 20 or 22 may be employed as a configuration in which a dynamic range setting information (HDR_type) recording field can store 3-bit data.

Meanings of the set values of (b) color gamut setting information (color_space) are as follows:
the set value = 00 indicates that color gamut setting of the stored data (PG data) in the clip AV stream fil is color gamut setting that enables an output of a color value corresponding to a color space defined by color space BT.707; and
the set value = 01 indicates that color gamut setting of the stored data (PG data) in the clip AV stream fil is color gamut setting that enables an output of a color value corresponding to a color space defined by color space BT.2020.

Further, the set values = 10 and 11 are set as reserved spaces. The reserved spaces are available when a different color space is used in the future.

The reproducing device can confirm a color gamut set form of the PG data stored in the clip AV stream file selected as the object to be reproduced with the clip information file by reference to the color gamut setting information recording field.

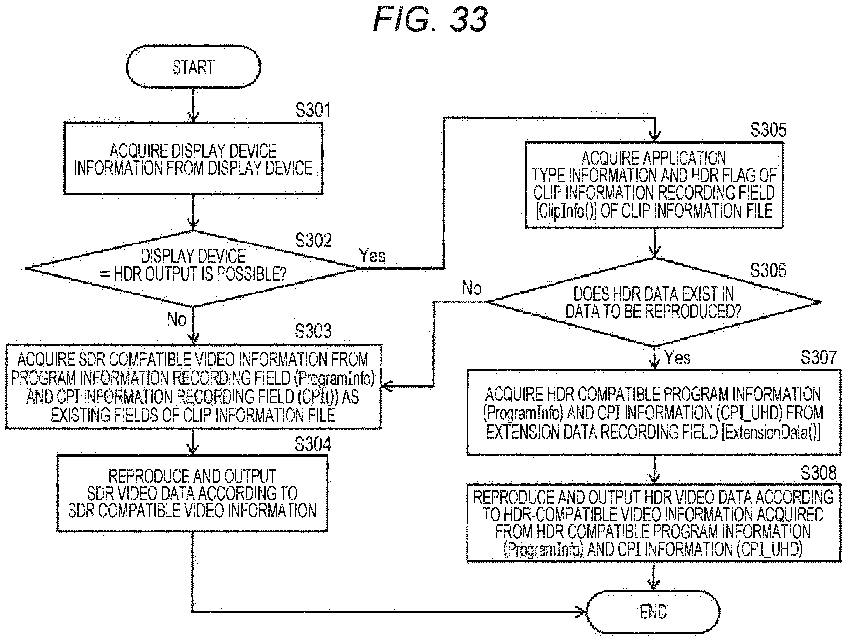

Next, a reproduction sequence of an information processing apparatus (reproducing device) that performs data reproduction, using the clip information file, from a disk on which the clip information file described in the present embodiment 2-1 is recorded, will be described with reference to the flowchart illustrated in Fig. 33.

The flowchart illustrated in Fig. 33 is a flowchart for describing a use sequence of the clip information file at the time of data reproduction.

In the present embodiment 2-1, the program information [ProgramInfo_HDR] as the HDR-PG data compatible video information (attribute information) is recorded in the extension data recording field [ExtensionData ()] in the clip information file recorded in the disk.

To be specific, various types of HDR-PG data compatible video information (attribute information) described with reference to Fig. 31 are recorded in the stream encoding information recording field [StreamCodingInfo()] of the program information [ProgramInfo_HDR].

A data processing unit of the reproducing device executes processing according to the flowchart illustrated in Fig. 33.

The data processing unit of the reproducing device includes a data processing unit including a CPU and the like having a program execution function, and executes processing according to a flow illustrated in Fig. 33 according to a program stored in a storage unit in advance. Processing of steps of the flow illustrated in Fig. 33 will be described in order.

### (Step S301)

First, the reproducing device acquires display device information from the display device connected to the reproducing device. For example, the reproducing device acquires the display device information including the dynamic range information (whether HDR compatible or HDR incompatible) displayable by the display device, the color gamut information (whether BT.707 compatible or BT.2020 compatible) that can be output, and the like by communication through the HDMI (registered trademark) cable.

### (Step S302)

In step S302, the reproducing device determines whether the display device is HDR compatible on the basis of the display device information acquired from the display device in step S301.

In a case where the display device is the HDR incompatible display device such as the SDR television, the determination of step S302 is No, and the processing proceeds to step S303.

Meanwhile, when the connected display device has been confirmed to be the HDR compatible display device such as the HDR television, the determination of step S302 is Yes, and the processing proceeds to step S305.

### (Step S303)

In step S302, when the display device connected to the reproducing device has been confirmed to be the HDR incompatible display device, in step S303, SDR-PG compatible video information (attribute information) is acquired from a program information recording field [ProgramInfo] as an existing field defined in the clip information file in advance.

The SDR-PG compatible information is acquired from the program information recording field [ProgramInfo] as an existing field defined in the clip information file illustrated in Fig. 27 in advance.

From the program information recording field [ProgramInfo], the video information regarding the SDR-PG data, for example, the information such as the dynamic range setting information and the color gamut setting information can be acquired.

### (Step S304)

The reproducing device executes processing of reproducing the SDR-PG data such as the SDR subtitle data and the SDRmenu acquired from the clip AV stream file and processing of outputting the data to the display device, according to the SDR-PG compatible video information (attribute information) acquired from an existing field in the clip information file in step S303.

The processing according to the series of steps S302 (No) to S303 to S304 is executed as processing of outputting the SDR-PG data to the HDR incompatible display device such as the SDR television connected to the reproducing device.

That is, an output of the SDR-PG data such as the SDR subtitle and the SDR menu according to the display function of the display device such as the SDR television is performed, and a data output adapted to the display device is executed.

### (Step S305)

Meanwhile, when the display device connected to the reproducing device has been confirmed to be the HDR compatible display device in step S302, the reproducing device performs processing of step S305.

In step S305, the reproducing device acquires record information of the clip information recording field [ClipInfo()] in the clip information file.

In this clip information recording field [ClipInfo()] in the clip information file, an HDR flag similar to that described in the playlist file is recorded.

The data processing unit of the reproducing device can confirm the set value of the HDR flag of the clip information recording field [ClipInfo()] in the clip information file, and determine whether the HDR video is included in the data to be reproduced with the clip information file.

### (Step S306)

The reproducing device determines whether the HDR video (HDR-PG data) is included in the data to be reproduced with the clip information file on the basis of the setting of the HDR flag acquired in step S305.

When the HDR-PG data is included in the data to be reproduced, the processing proceeds to step S307.

When the value indicates that the HDR-PG data is not included in the data to be reproduced, the processing proceeds to step S303.

When the HDR-PG data is not included in the data to be reproduced, the processing of steps S303 to S304 is executed.

That is, the SDR-PG compatible video information (attribute information) is acquired from the program information recording field [ProgramInfo] as an existing field defined in the clip information file in advance, and reproduction and an output of the SDR-PG (the SDR subtitle and the SDR menu) is executed according to the acquired SDR-PG compatible STN table.

### (Step S307)

When the HDR-PG data has been confirmed to be included in the data to be reproduced in step S306, the processing proceeds to step S307.

In step S307, the reproducing device acquires the HDR-PG data compatible video information (attribute information) from the extension data recording field [ExtensionData ()] in the clip information file.

To be specific, the reproducing device acquires the HDR-PG data (HDR graphics data) compatible video information (attribute information) from the program information recording field [ProgramInfo] added to and recorded in the extension data recording field [ExtensionData ()] in the clip information file.

In the program information recording field [ProgramInfo] added to and recorded in the extension data recording field [ExtensionData()], the video information regarding the HDR-PG (HDR graphics data) described with reference to Fig. 31, for example, information such as the dynamic range setting information and the color gamut setting information is recorded.

### (Step S308)

The reproducing device executes processing of reproducing the HDR-PG data, that is, the HDR graphics data, such as the HDR subtitle data and the HDR menu data acquired from the clip AV stream file, and processing of outputting the data to the display device, according to the HDR-PG data (HDR graphics data) compatible video information acquired from the extension data recording field [ExtensionData ()] in the clip information file in step S307.

The processing according to the series of steps S302 (Yes) to S305 to S306 (Yes) to S307 to S308 is executed as processing of outputting the HDR-PG to the HDR compatible display device such as the HDR television connected to the reproducing device.

That is, an output of the HDR-PG data such as the HDR subtitle and the HDR menu according to the display function of the display device such as the HDR television is performed, and an output of the PG data adapted to the display device is executed.

Note that, in the flowchart illustrated in Fig. 33, the processing has been set to outputting the PG data of either the HDR-PG data (HDR graphics data) or the SDR-PG data (SDR graphics data) to the display device. However, for example, in a case where the PG data included in the content recorded on the disk is only the HDR-PG data, and the display device connected to the reproducing device is HDR incompatible (the SDR television or the like), the reproducing device may perform processing of converting the HDR-PG data (HDR graphics data) into the SDR-PG data (SDR graphics data) and outputting the data. Alternatively, the processing may be set to generating and outputting a message notifying that a normal output cannot be performed.

Further, in the flowchart illustrated in Fig. 33, the example of executing the selective reproduction processing of the SDR-PG data and the HDR-PG data has been described. However, this is an example, and for example, selection and reproduction processing of the following data having different setting can be also executed according to the flow illustrated in Fig. 33:
(1) AVC content compatible PG data and HEVC content compatible PG data;
(2) 2K content (1920 × 1080 pixels) compatible PG data and 4K content (3840 × 2160 pixels) compatible PG data; and
(3) content compatible PG data of the color gamut = BT.707 and content compatible PG data of the color gamut = Bt.2020.

In this case, processing in which "SDR" and "HDR" described in the flow illustrated in Fig. 33 are replaced as follows may just be executed:
(1) "SDR" → "AVC" and "HDR" → "HEVC";
(2) "SDR" → "2K" and "HDR" → "4K"; and
(3) "SDR" → "BT.707" and "HDR" → "BT.2020".

### [5-2. (Embodiment 2-2) Embodiment to record video information (attribute information) of presentation graphics (PG) data in program information recording field [ProgramInfo ()] of clip information file]

Next, as an embodiment 2-2, an embodiment to record video information (attribute information) of presentation graphics (PG) data in a program information recording field [ProgramInfo()] of a clip information file will be described.

As described with reference to Fig. 27, in the clip information file, the following substance data recording fields are set:
(1) a clip information recording field [ClipInfo ()] in which attribute information of clip such as clip stream type information and application type information is recorded;
(2) a sequence information recording field [SequenceInfo()] in which sequence information such as time management information in reproduction processing is mainly recorded;
(3) a program information recording field [ProgramInfo ()] in which program information such as identification information of a program map table, and the number of streams in a program stream is recorded;
(4) a CPI recording field [CPI ()] in which an EP map to which an entry point (EP) of a presentation timestamp (PTS) of an I picture is set is recorded, for example;
(5) a clip mark recording field [ClipMark()] currently set to a reserved field; and
(6) [ExtensionData()] as an extension data recording field in which various extension data are recordable.

The embodiment 2-2 described below is an embodiment to record HDR-PG data compatible video information (attribute information) in a program information recording field [ProgramInfo ()] in which program information included in a clip information file is recorded.

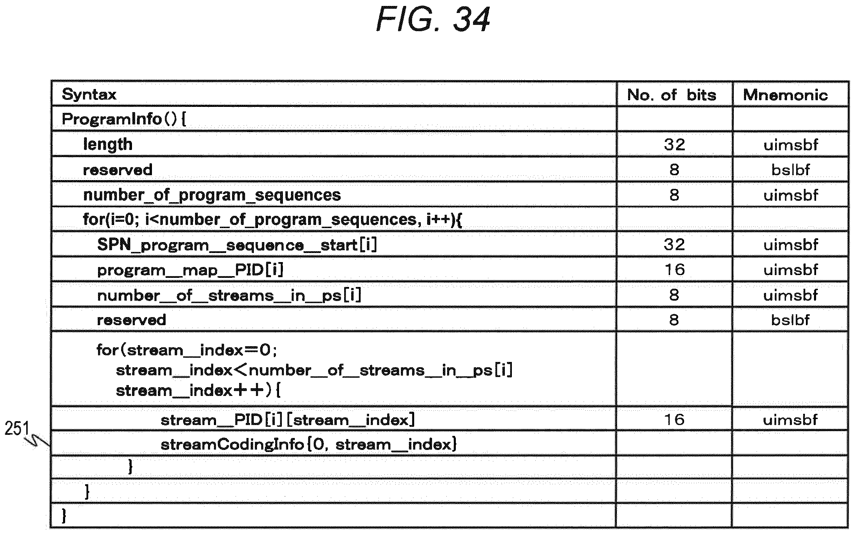

Fig. 34 illustrates a diagram of syntax that indicates a data configuration of the program information recording field [ProgramInfo ()] included in the clip information file.

The program information recording field [ProgramInfo ()] illustrated in Fig. 34 is a program information recording field [ProgramInfo ()] set to the clip information file in advance.

Video information (attribute information) regarding HDR-PG data is recorded in a stream encoding information recording field [StreamCodingInfo()] 251 in the program information recording field [ProgramInfo ()].

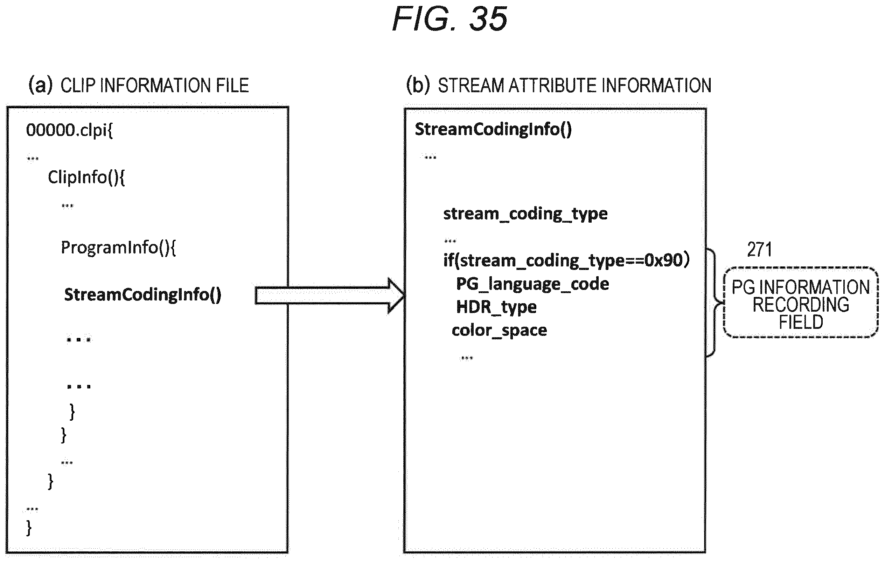

Figs. 35 (a) and 35 (b) illustrate the following drawings:
(a) a clip information file; and
(b) a stream encoding information recording field [StreamCodingInfo()] as a field in which video attribute information in units of a stream coding type [Stream_coding_type] set to a program information recording field [ProgramInfo ()] in a clip information file.

A data region of Fig. 35(b) corresponds to the stream encoding information recording field [StreamCodingInfo()] 251 illustrated in Fig. 34.

In the present embodiment, video information (attribute information) regarding HDR-PG data is recorded in the stream encoding information recording field [StreamCodingInfo()] 251.

Note that, in streamattribute information of Fig. 35(b), video information (attribute information) regarding SDR-PG data can be recorded, other than the video information (attribute information) regarding HDR-PG data.

That is, in the stream attribute information of Fig. 35(b), a plurality of pieces of video attribute information can be recorded in units of a stream coding type [Stream_coding_type].

In the present embodiment 2-2, the video information (attribute information) regarding the HDR-PG data is newly recorded in the stream encoding information recording field [StreamCodingInfo()] 251 illustrated in Fig. 34.

Fig. 35(b) illustrates a PG information recording field 271.

In the PG information recording field 271 illustrated in Fig. 35(b), a value [0x90] that indicates that the stream coding type [Stream_coding_type] = 0x90, that is, the stream coding type is related to presentation graphics (PG). After the recording field of the stream coding type [Stream_coding_type] = 0x90, PG information (language, an HDR type, color gamut (color space) information, and the like) regarding the PG data such as a subtitle and a menu is recorded.

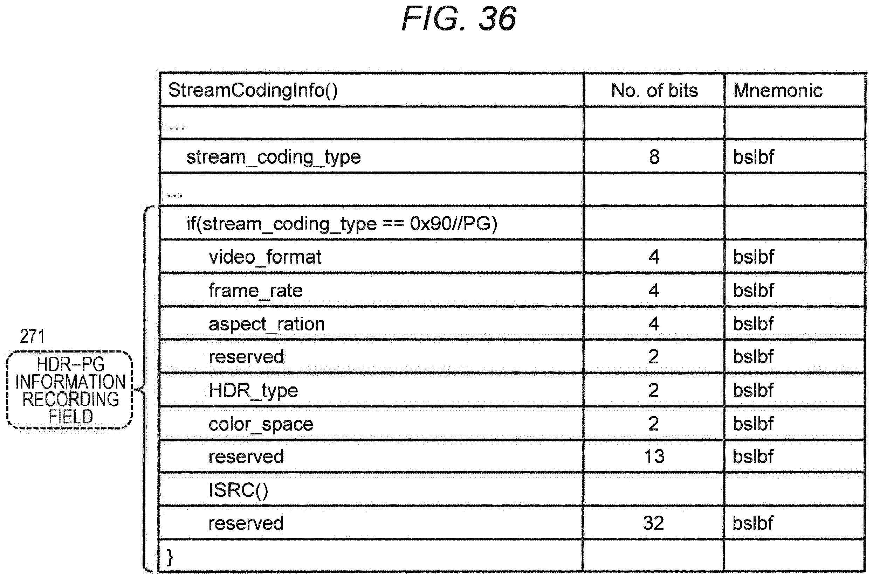

Fig. 36 illustrates a detailed configuration example of the stream encoding information recording field [StreamCodingInfo()] in the clip information file.

Fig. 36 illustrates syntax that indicates details of the PG information recording field 271 illustrated in Fig. 35(b).

In the PG information recording field 271 illustrated in Fig. 36, the video information (attribute information) regarding the HDR-PG data such as HDR subtitle data and HDR menu data light reproducible by application of the clip information file.

To be specific, the following video information is recorded:
(1) a video format (video_format);
(2) a frame rate (frame_rate);
(3) an aspect ratio (aspect_ratio);
(4) dynamic range setting information (HDR_type);
(5) color gamut setting information (color_space); and
(6) content production information (ISRC()].

In the (1) video format (video_format), resolution information of video data to which the HDR-PG data such as the subtitle data and the menu data is to be superimposed, for example, whether the video is a 2K video of 1920 × 1080, or a 4K video of 3840 × 2160 is recorded.

In the (2) frame rate (frame_rate), frame rate information of video data to which the HDR-PG data such as the subtitle data and the menu data is to be superimposed is recorded.

In the (3) aspect ratio (aspect_ratio), an aspect ratio of an output video of video data to which the HDR-PG data such as the subtitle data and the menu data is to be superimposed, for example, an aspect ratio of 16 : 9, 4 : 3, or the like is recorded.

In the (4) dynamic range setting information (HDR_type), information similar to the dynamic range information described with reference to Figs. 32(a) and 32(b) is recorded. For example, the following values are recorded:
the set value = 00 indicates that the stored video (HDR-PG data) in a clip AV stream file is the SDR-PG data;
the set value = 01 indicates that the stored video (HDR-PG data) in the clip AV stream file is the HDR-PG data of HDR-type 1;
the set value = 10 indicates that the stored video (HDR-PG data) in the clip AV stream file is the HDR-PG data of HDR-type 2; and
the set value = 11 indicates that the stored video (HDR-PG data) in the clip AV stream file is the HDR-PG data of HDR-type 3.

A reproducing device can confirm a set form of a dynamic range of the PG data stored in the clip AV stream file selected as an object to be reproduced with the clip information file by reference to the dynamic range setting information recording field.

Note that a configuration to set the bit information described with reference to Fig. 20 or 22 may be employed as a configuration in which a dynamic range setting information (HDR_type) recording field can store 3-bit data.

In the (5) color gamut setting information (color_space), information similar to the color gamut setting information described with reference to Figs. 32 (a) and 32 (b) is recorded. For example, the following values are recorded:
the set value = 00 indicates that color gamut setting of the stored data (PG data) in the clip AV stream fil is color gamut setting that enables an output of a color value corresponding to a color space defined by color space BT.707; and
the set value = 01 indicates that color gamut setting of the stored data (PG data) in the clip AV stream fil is color gamut setting that enables an output of a color value corresponding to a color space defined by color space BT.2020.

Further, the set values = 10 and 11 are set as reserved spaces. The reserved spaces are available when a different color space is used in the future.

The reproducing device can confirm a color gamut set form of the PG data stored in the clip AV stream file selected as the object to be reproduced with the clip information file by reference to the color gamut setting information recording field.

In the (6) content production information (ISRC()], content production related information such as a country and an organization who have produced content to be reproduced with the clip information file, and date and time when the content to be reproduced was produced is recorded.

As described above, in the present embodiment 2-2, the HDR-PG data compatible video information (attribute information) is newly recorded in the stream encoding information recording field [StreamCodingInfo()]251 of the program information recording field [ProgramInfo ()] included in the clip information file.

A reproducing device can determine whether the HDR-PG data is adaptable to a display device connected to the reproducing device by reference to the video information of the HDR-PG data, and execute processing of selecting and reproducing a video adapted to the connected display device, and converting a video into video data that can be output to the connected reproducing device and outputting the data.

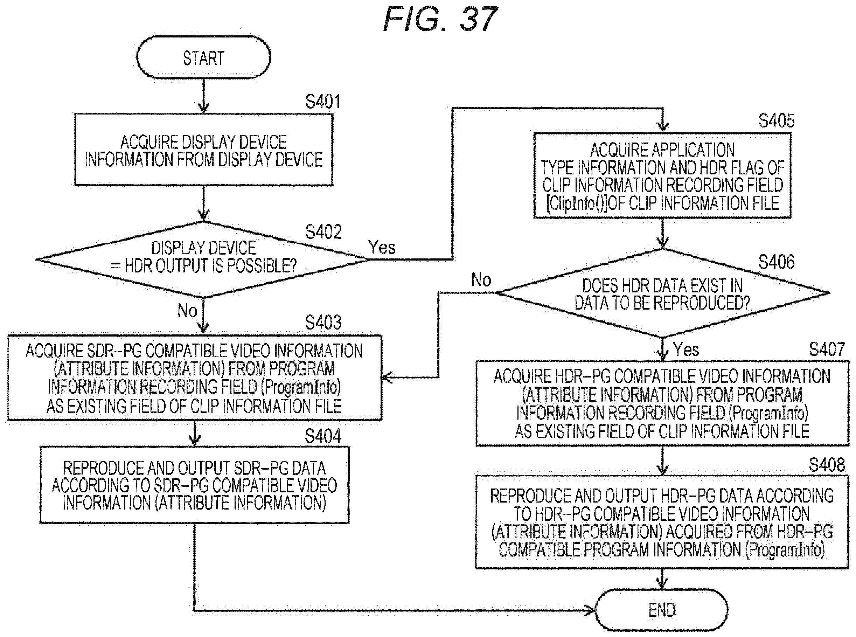

Next, a reproduction sequence of an information processing apparatus (reproducing device) that performs data reproduction, using the clip information file, from a disk on which the clip information file described in the present embodiment 2-2 is recorded, will be described with reference to the flowchart illustrated in Fig. 37.

The flowchart illustrated in Fig. 37 is a flowchart for describing a use sequence of the clip information file at the time of data reproduction.

The present embodiment 2-2 refers to the configuration to record the HDR-PG data compatible video information (attribute information) in the program information recording field [ProgramInfo ()] of the clip information file recorded on the disk.

A data processing unit of the reproducing device executes processing according to the flowchart illustrated in Fig. 37.

The data processing unit of the reproducing device includes a data processing unit including a CPU and the like having a program execution function, and executes processing according to a flow illustrated in Fig. 37 according to a program stored in a storage unit in advance. Processing of steps of the flow illustrated in Fig. 37 will be described in order.

### (Step S401)

First, the reproducing device acquires display device information from the display device connected to the reproducing device. For example, the reproducing device acquires the display device information including the dynamic range information (whether HDR compatible or HDR incompatible) displayable by the display device, the color gamut information (whether BT.707 compatible or BT.2020 compatible) that can be output, and the like by communication through the HDMI (registered trademark) cable.

### (Step S402)

In step S402, the reproducing device determines whether the display device is HDR compatible on the basis of the display device information acquired from the display device in step S401.

In a case where the display device is the HDR incompatible display device such as the SDR television, the determination of step S402 is No, and the processing proceeds to step S403.

Meanwhile, when the connected display device has been confirmed to be the HDR compatible display device such as the HDR television, the determination of step S402 is Yes, and the processing proceeds to step S405.

### (Step S403)

In step S402, when the display device connected to the reproducing device has been confirmed to be the HDR incompatible display device, in step S403, the SDR-PG data compatible video information (attribute information) is acquired from the program information recording field [ProgramInfo] as an existing field defined in the clip information file in advance.

The SDR-PG compatible information is acquired from the program information recording field [ProgramInfo] as an existing field defined in the clip information file illustrated in Fig. 27 in advance.

From the program information recording field [ProgramInfo], the video information regarding the SDR-PG data, for example, the information such as the dynamic range setting information and the color gamut setting information can be acquired.

### (Step S404)

The reproducing device executes processing of reproducing the SDR-PG data such as the SDR subtitle data and the SDRmenu acquired from the clip AV stream file and processing of outputting the data to the display device according to the SDR-PG data compatible video information acquired from an existing field in the clip information file in step S403.

The processing of the series of steps S402 (No) to S403 to S404 is executed as processing of outputting the SDR video to the HDR incompatible display device such as the SDR television connected to the reproducing device.

That is, an SDR-PG data output such as the SDR subtitle data and the SDR menu data according to the display function of the display device such as the SDR television, and a video output adapted to the display device is executed.

### (Step S405)

Meanwhile, when the display device connected to the reproducing device has been confirmed to be the HDR compatible display device in step S402, the reproducing device performs processing of step S405.

In step S405, the reproducing device acquires record information of the clip information recording field [ClipInfo()] in the clip information file.

In this clip information recording field [ClipInfo()] in the clip information file, an HDR flag similar to that described in the playlist file is recorded.

The data processing unit of the reproducing device can confirm the set value of the HDR flag of the clip information recording field [ClipInfo()] in the clip information file, and determine whether the HDR video is included in the data to be reproduced with the clip information file.

### (Step S406)

The reproducing device determines whether the HDR video (HDR-PG data) is included in the data to be reproduced with the clip information file on the basis of the setting of the HDR flag acquired in step S405.

When the HDR-PG data is included in the data to be reproduced, the processing proceeds to step 4307.

When the value indicating that the HDR-PG data is not included in the data to be reproduced, the processing proceeds to step S403.

When the HDR-PG data is not included in the data to be reproduced, the processing of steps S403 to S404 is executed.

That is, the SDR-PG compatible video information (attribute information) is acquired from the program information recording field [ProgramInfo] as an existing field defined in the clip information file in advance, and reproduction and an output of the SDR-PG (the SDR subtitle and the SDR menu) is executed according to the acquired SDR-PG compatible STN table.

### (Step S407)

When the HDR video has been confirmed to be included in the data to be reproduced in step S406, the processing proceeds to step S407.

In step S407, the reproducing device performs acquisition from the program information recording field [ProgramInfo] as an existing field defined in the clip information file in advance.

In the program information recording field [ProgramInfo], the video information regarding the HDR-PG data is added and recorded, as described with reference to Figs. 34 to 36. HDR-PG compatible information such as the dynamic range setting information and the color gamut setting information can be acquired from the program information recording field [ProgramInfo].

### (Step S408)

The reproducing device executes processing of reproducing the HDR-PG data (HDR graphics data) such as the HDR subtitle data and the HDR menu acquired from the clip AV stream file and processing of outputting the data to the display device, according to the HDR-PG compatible video information acquired from the program information recording field [ProgramInfo] in the clip information file in step S407.

The processing according to the series of steps S402 (Yes) to S405 to S406 (Yes) to S407 to S408 is executed as processing of outputting the HDR video to the HDR compatible display device such as the HDR television connected to the reproducing device.

That is, an output of the HDR-PG data (HDR graphics data) such as the HDR subtitle and the HDR menu according to the display function of the display device such as the HDR television is performed, and an output of the PG data adapted to the display device is executed.

Note that, in the flowchart illustrated in Fig. 37, the processing has been set to outputting the PG data of either the HDR-PG data (HDR graphics data) or the SDR-PG data (SDR graphics data) to the display device. However, for example, in a case where the PG data included in the content recorded on the disk is only the HDR-PG data, and the display device connected to the reproducing device is HDR incompatible (the SDR television or the like), the reproducing device may perform processing of converting the HDR-PG data (HDR graphics data) into the SDR-PG data (SDR graphics data) and outputting the data. Alternatively, the processing may be set to generating and outputting a message notifying that a normal output cannot be performed.

Further, in the flowchart illustrated in Fig. 37, the example of executing the selective reproduction processing of the SDR-PG data and the HDR-PG data has been described. However, this is an example, and for example, selection and reproduction processing of the following data having different setting can be also executed according to the flow illustrated in Fig. 37:
(1) AVC content compatible PG data and HEVC content compatible PG data;
(2) 2K content (1920 × 1080 pixels) compatible PG data and 4K content (3840 × 2160 pixels) compatible PG data; and
(3) content compatible PG data of the color gamut = BT.707 and content compatible PG data of the color gamut = Bt.2020.

In this case, processing in which "SDR" and "HDR" described in the flow illustrated in Fig. 37 are replaced as follows may just be executed:
(1) "SDR" → "AVC" and "HDR" → "HEVC";
(2) "SDR" → "2K" and "HDR" → "4K"; and
(3) "SDR" → "BT.707" and "HDR" → "BT.2020".

### [6. Generation (authoring) of record data to medium and data recording processing]

In the above-described embodiment, the processing of reproducing the presentation graphics (PG) data, using the playlist file and the clip information file recorded on the disk has been mainly described.

However, the configuration of the present disclosure is not limited to the data reproduction processing, and includes generation (authoring) of record data to a medium and data recording processing to a medium, and an information recording medium on which data is recorded.

For example, an information processing apparatus that executes generation (authoring) of record data to a medium executes processing of generating a playlist file and a clip information file described above.

To be specific, the information processing apparatus includes a data processing unit that executes processing of generating record data on a disk, and the data processing unit executes processing of generating a file including the following data, as a reproduction control information file corresponding to reproduction data:
identification data that indicates whether high dynamic range-presentation graphics (HDR-PG) data (HDR graphics data) is recorded as data to be controlled based on the reproduction control information file; and
video information (attribute information) of the HDR-PG data (HDR graphics data) in a case where the HDR-PG data (HDR graphics data) is included as the data to be controlled based on the reproduction control information file.

For example, the data processing unit generates:
identification data that indicates whether the HDR-PG video data is recorded as the data to be controlled based on the reproduction control information file; and
a reproduction control information file in which the video information of the HDR-PG data is recorded, in the case where the HDR-PG data is included as the data to be controlled based on the reproduction control information file.

Note that the reproduction control information file is the playlist file or the clip information file, and has a configuration in which the data described in the above-described embodiment is recorded.

For example, the data processing unit generates one playlist file or one clip information file in which the video information (attribute information) of both of the HDR-PG data and standard dynamic range(SDR)-PG data is recorded.

Further, an information recording medium on which data generated by the above-described record data generation processing is recorded has the following configuration, for example:
an information recording medium on which a reproduction data storage file and a reproduction control information file corresponding to the reproduction data storage file are recorded,
the reproduction control information file including
identification data that indicates whether HDR-PG data (HDR graphics data) is recorded as data to be controlled based on reproduction control information file, and
video information (attribute information) of the HDR-PG data in a case where the HDR-PG data is included as the data to be controlled based on the reproduction control information file, as record data.

A reproducing device that performs reproduction of the disk on which such data is recorded can acquire the video information (attribute information) of the HDR-PG data by reference to the reproduction control information file, as described in the above-described embodiments.

Note that the reproduction control information file is the playlist file or the clip information file in which the record data described in the above embodiments is stored.

### [7. Configuration example of information processing apparatus]

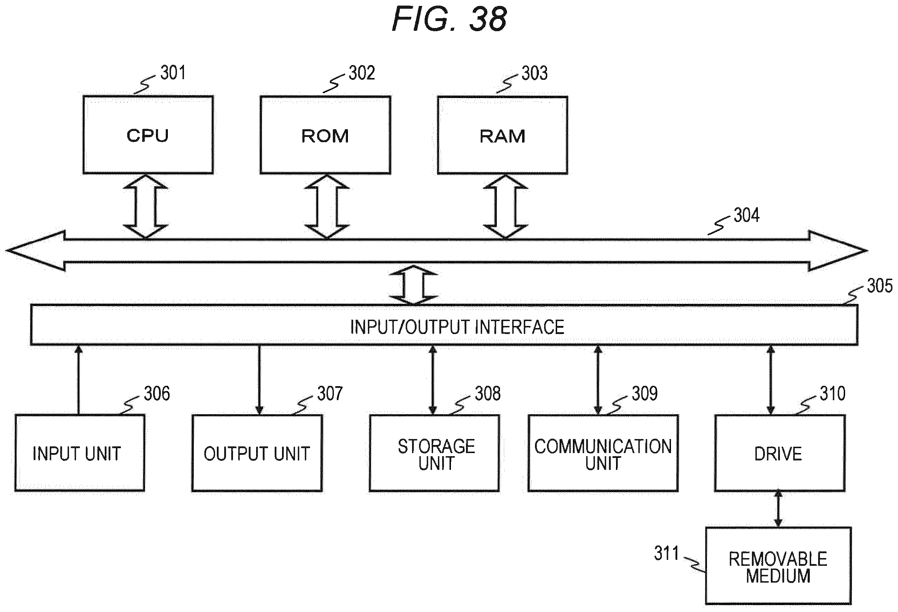

Next, a hardware configuration example of an information processing apparatus applicable as a disk reproducing device, a record data generation device, a data recording device, or an information recording medium manufacturing device will be described with reference to Fig. 38.

A central processing unit (CPU) 301 functions as a data processing unit that executes various types of processing according to programs recorded in a read only memory (ROM) 302 or a storage unit 308. For example, the CPU 301 executes processing according to the sequences described in the above-described embodiments. The programs to be executed by the CPU 301, data, and the like are stored in a random access memory (RAM) 303. These CPU 301, ROM 302, and RAM 303 are connected to one another by a bus 304.

The CPU 301 is connected to an input/output interface 305 through the bus 304, and an input unit 306 made of various switches, a keyboard, a mouse, a microphone, and the like, and an output unit 307 made of a display, a speaker, and the like are connected to the input/output interface 305. The CPU 301 executes the various types of processing corresponding to commands input from the input unit 306, and outputs processing results to the output unit 307, for example.

The storage unit 308 connected to the input/output interface 305 is made of a hard disk, for example, and stores the programs to be executed by the CPU 301 and various data. A communication unit 309 functions as a transmission/reception unit of data communication through a network such as the Internet or a local area network, and as a transmission/reception unit of broadcast waves, and performs communication with external devices.

A drive 310 connected to the input/output interface 305 drives a removable medium 311 such as a magnetic disk, an optical disk, a magneto-optical disk, or a semiconductor memory such as a memory card, and executes recording or reading of data.

Note that encoding and decoding of data is executable as processing of the CPU 301 as a data processing unit. However, a codec as dedicated hardware for executing encoding processing or decoding processing may be included.

### [8. Summary of configuration of present disclosure]

Embodiments of the present disclosure have been described in detail with reference to the specific embodiments . However, it is obvious that a person skilled in the art can achieve modifications and substitutions of the embodiments without departing from the gist of the present disclosure. That is, the present invention has been described as examples, and should not be construed in a restrictive manner. To judge the gist of the present disclosure, the claims should be considered.

Further, the series of processing described in the specification can be executed by hardware, software, or a combined configuration of the hardware and software. In a case of executing the processing by software, a program that records the processing sequence can be executed by being installed to a memory in a computer incorporated in dedicated hardware and executed, or can be executed by being installed to a general-purpose computer that can execute various types of processing. For example, the program can be recorded on a recording medium in advance. The program can be received through a network such as a local area network (LAN) or the Internet and installed to a recording medium such as a built-in hard disk, in addition to the installation to a computer from a recording medium.

Note that the various types of processing described in the specification may not only be executed in time series according to the description, but also be executed in parallel or individually according to processing performance of the device that executes the processing or as needed. Further, the system in the present specification is a logical set configuration of a plurality of devices, and is not limited to devices having configurations, which exist in the same housing.

### INDUSTRIAL APPLICABILITY

As described above, according to the configuration of an embodiment of the present disclosure, the attribute information of the high dynamic range (HDR) data is acquired from the playlist file or the clip information file, and the video reproduction according to the display device is realized.

To be specific, the data processing unit that executes the reproduction processing of the disk recorded data acquires the playlist file and the clip information file as the reproduction control information files corresponding to the reproduction data recorded on the disk, determines whether the HDR graphics data is recorded on the disk on the basis of record data of these files, and further acquires the attribute information of the HDR graphics data from the reproduction control information and executes the control of the output data for the display device according to the acquired information in a case where the HDR graphics data is recorded on the disk.

With the present configuration, the attribute information of the HDR graphics data is acquired from the playlist file and the clip information file, and the video reproduction according to the display device is realized.

### REFERENCE SIGNS LIST

- 10: Information recording medium (disk)
- 20: Information processing apparatus
- 31: HDR incompatible display device (SDR television)
- 32: HDR compatible display device (HDR television)
- 51: Management information setting unit
- 52: Data unit
- 301: CPU
- 302: ROM
- 303: RAM
- 304: Bus
- 305: Input/output interface
- 306: Input unit
- 307: Output unit
- 308: Storage unit
- 309: Communication unit
- 310: Drive
- 311: Removable medium

## Claims

1. An information processing apparatus comprising:
a data processing unit configured to execute reproduction processing of disk recorded data stored as AV stream data in a clip AV stream file, wherein
the data processing unit
acquires a reproduction control information file corresponding to the AV stream data recorded on the disk, and
determines whether high dynamic range (HDR) graphics data constituted from HDR data is recorded on the disk on the basis of record data of the acquired reproduction control information file, **characterized in that**
the data processing unit further acquires attribute information of the HDR graphics data and executes control of output data to a display device according to the acquired attribute information in a case where it was determined that the HDR graphics data is recorded on the disk, wherein
the attribute information of the HDR graphics data are acquired from the reproduction control information file,
wherein the reproduction control information file is a clip information file, wherein the clip information file is a file specified by a playlist file, and includes reproduction position information in the clip AV stream file, and the playlist file is a file that defines a reproduction order of content, and includes specification information of reproduction position information, in the clip information file.

2. The information processing apparatus according to claim 1, wherein
the HDR graphics data is subtitle data or menu screen display data constituted from the HDR data.

3. The information processing apparatus according to claim 1, wherein
the data processing unit acquires the attribute information of the HDR graphics data from an extension data recording field in the clip information file, and executes the control of output data to a display device according to the acquired attribute information.

4. The information processing apparatus according to claim 1, wherein
the data processing unit acquires the attribute information of the HDR graphics data from HDR graphics data compatible program information recorded in the extension data recording field in the clip information file, and executes the control of output data to a display device according to the acquired attribute information.

5. The information processing apparatus according to claim 1, wherein
the data processing unit acquires the attribute information of the HDR graphics data from a program information recording field in the clip information file, and executes the control of output data to a display device according to the acquired attribute information.

6. An information processing apparatus comprising:
a data processing unit configured to execute processing of generating record data to a medium, wherein the record data includes data stored as AV stream data in a clip AV stream file, wherein
the data processing unit generates,
as a reproduction control information file corresponding to the AV stream data, identification data indicating whether HDR graphics data constituted from high dynamic range (HDR) data is recorded as data to be controlled based on the reproduction control information file, and
a reproduction control information file, **characterized in that** in the reproduction control information file attribute information of the HDR graphics data is recorded in a case where the HDR graphics data is included as the data to be controlled based on the reproduction control information file,
wherein the reproduction control information file is a clip information file, wherein the clip information file is a file specified by a playlist file, and includes reproduction position information in the clip AV stream file, and the playlist file is a file that defines a reproduction order of content, and includes specification information of reproduction position information, in the clip information file.

7. A system comprising a reproducing device that reproduces reproduction data and an information recording medium on which a reproduction data storage file and a reproduction control information file corresponding to the reproduction data storage file are recorded, wherein the reproduction data is data stored as AV stream data in a clip AVstream file, the reproduction control information file including identification data indicating whether high dynamic range (HDR) graphics data constituted from HDR data is recorded as data to be controlled based on the reproduction control information file, and
attribute information of the HDR graphics data in a case where the HDR graphics data is included as the data to be controlled based on the reproduction control information file, as record data,
**characterized in that** the reproduction data has a configuration that enables acquisition of the attribute information of the HDR graphics data by reference to the reproduction control information file,
wherein the reproduction control information file is a clip information file, and
wherein the reproducing device has a configuration that enables acquiring the attribute information of the HDR graphics data from the clip information file, and executes the control of output data to a display device according to the acquired attribute information, wherein the clip information file is a file specified by a playlist file, and includes reproduction position information in the clip AV stream file, and the playlist file is a file that defines a reproduction order of content, and includes specification information of reproduction position information, in the clip information file.

8. An information processing method executed in an information processing apparatus according to any of claims 1 to 6, the method comprising:
acquiring, by the data processing unit, a reproduction control information file corresponding to reproduction data recorded on a disk, wherein the reproduction data is data stored as AV stream data in a clip AVstream file, and
determining, by the data processing unit, whether high dynamic range (HDR) graphics data constituted from HDR data is recorded on the disk on the basis of record data of the acquired reproduction control information file, **characterized in that** the method further comprises
acquiring, by the data processing unit, attribute information of the HDR graphics data from the reproduction control information file and executing control of output data to a display device according to the acquired attribute information in a case where it was determined that the HDR graphics data is recorded on the disk,
wherein the reproduction control information file is a clip information file, wherein the clip information file is a file specified by a playlist file, and includes reproduction position information in the clip AVstream file, and the playlist file is a file that defines a reproduction order of content, and includes specification information of reproduction position information, in the clip information file.

9. A computer program comprising instructions to cause an information processing apparatus to execute information processing according to the information processing method according to claim 8.

## Patentansprüche

1. Informationsverarbeitungsvorrichtung, Folgendes umfassend:
eine Datenverarbeitungseinheit, die dazu ausgelegt ist, Wiedergabeverarbeitung von Plattenaufzeichnungsdaten, gespeichert als AV-Streamdaten in einer Clip-AV-Streamdatei, auszuführen,
wobei die Datenverarbeitungseinheit
eine Wiedergabe-Steuerinformationsdatei, die den auf der Disk aufgezeichneten AV-Streamdaten entspricht, erfasst und
bestimmt, ob Grafikdaten mit hohem Dynamikbereich (HDR), gebildet aus HDR-Daten, auf der Disk aufgezeichnet sind, auf der Basis von Aufzeichnungsdaten der erfassten Wiedergabe-Steuerinformationsdatei, **dadurch gekennzeichnet, dass**
die Datenverarbeitungseinheit ferner Attributinformationen der HDR-Grafikdaten erfasst und eine Steuerung von Ausgabedaten zu einer Anzeigevorrichtung gemäß den erfassten Attributinformationen ausführt in einem Fall, in dem bestimmt wurde, dass die HDR-Grafikdaten auf der Disk aufgezeichnet sind,
wobei die Attributinformationen der HDR-Grafikdaten von der Wiedergabe-Steuerinformationsdatei erfasst werden,
wobei die Wiedergabe-Steuerinformationsdatei eine Clip-Informationsdatei ist, wobei die Clip-Informationsdatei eine von einer Wiedergabelistendatei angegebene Datei ist und Wiedergabepositionsinformationen in der Clip-AV-Streamdatei enthält, und die Wiedergabelistendatei eine Datei ist, die eine Wiedergabereihenfolge des Inhalts definiert und Spezifikationsinformationen von Wiedergabepositionsinformationen in der Clip-Informationsdatei enthält.

2. Informationsverarbeitungsvorrichtung gemäß Anspruch 1,
wobei die HDR-Grafikdaten Untertiteldaten oder Menübildschirm-Anzeigedaten sind, die aus den HDR-Daten gebildet werden.

3. Informationsverarbeitungsvorrichtung gemäß Anspruch 1,
wobei die Datenverarbeitungseinheit die Attributinformationen der HDR-Grafikdaten von einem Erweiterungsdaten-Aufzeichnungsfeld in der Clip-Informationsdatei erfasst und die Steuerung von Ausgabedaten zu einer Anzeigevorrichtung gemäß den erfassten Attributinformationen ausführt.

4. Informationsverarbeitungsvorrichtung gemäß Anspruch 1,
wobei die Datenverarbeitungseinheit die Attributinformationen der HDR-Grafikdaten von mit HDR-Grafikdaten kompatiblen Programminformationen, die in dem Erweiterungsdaten-Aufzeichnungsfeld in der Clip-Informationsdatei aufgezeichnet sind, erfasst und die Steuerung von Ausgabedaten zu einer Anzeigevorrichtung gemäß den erfassten Attributinformationen ausführt.

5. Informationsverarbeitungsvorrichtung gemäß Anspruch 1,
wobei die Datenverarbeitungseinheit die Attributinformationen der HDR-Grafikdaten von einem Programminformationen-Aufzeichnungsfeld in der Clip-Informationsdatei erfasst und die Steuerung von Ausgabedaten zu einer Anzeigevorrichtung gemäß den erfassten Attributinformationen ausführt.

6. Informationsverarbeitungsvorrichtung, Folgendes umfassend:
eine Datenverarbeitungseinheit, die dazu ausgelegt ist, eine Verarbeitung der Erzeugung von Aufzeichnungsdaten auf einem Medium auszuführen, wobei die Aufzeichnungsdaten Daten enthalten, die als AV-Streamdaten in einer Clip-AV-Streamdatei gespeichert sind,
wobei die Datenverarbeitungseinheit Folgendes erzeugt:
als eine den AV-Streamdaten entsprechende Wiedergabe-Steuerinformationsdatei, Identifikationsdaten, die angeben, ob aus Daten mit hohem Dynamikbereich (HDR) gebildete HDR-Grafikdaten als Daten aufgezeichnet sind, die auf der Basis der Wiedergabe-Steuerinformationsdatei zu steuern sind, und
eine Wiedergabe-Steuerinformationsdatei, die **dadurch gekennzeichnet ist, dass** in der Wiedergabe-Steuerinformationsdatei Attributinformationen der HDR-Grafikdaten aufgezeichnet sind, in einem Fall, in dem die HDR-Grafikdaten als die zu steuernden Daten auf der Basis der Wiedergabe-Steuerinformationsdatei enthalten sind,
wobei die Wiedergabe-Steuerinformationsdatei eine Clip-Informationsdatei ist, wobei die Clip-Informationsdatei eine von einer Wiedergabelistendatei angegebene Datei ist und Wiedergabepositionsinformationen in der Clip-AV-Streamdatei enthält, und die Wiedergabelistendatei eine Datei ist, die eine Wiedergabereihenfolge des Inhalts definiert und Spezifikationsinformationen von Wiedergabepositionsinformationen in der Clip-Informationsdatei enthält.

7. System, das eine Wiedergabevorrichtung aufweist, die Wiedergabedaten reproduziert, und ein Informationsaufzeichnungsmedium, auf dem eine Wiedergabedaten-Speicherdatei und eine der Wiedergabedaten-Speicherdatei entsprechende Wiedergabe-Steuerinformationsdatei aufgezeichnet sind, wobei die Wiedergabedaten Daten sind, die als AV-Streamdaten in einer Clip-AV-Streamdatei gespeichert sind,
wobei die Wiedergabe-Steuerinformationsdatei Folgendes enthält:
Identifikationsdaten die angeben, ob aus HDR-Daten gebildete Grafikdaten mit hohem Dynamikbereich (HDR) als zu steuernde Daten auf der Basis der Wiedergabe-Steuerinformationsdatei aufgezeichnet sind, und
Attributinformationen der HDR-Grafikdaten in einem Fall, in dem die HDR-Grafikdaten als die zu steuernden Daten enthalten sind, basierend auf der Wiedergabe-Steuerinformationsdatei, als Aufzeichnungsdaten,
**dadurch gekennzeichnet, dass** die Wiedergabedaten eine Konfiguration haben, welche die Erfassung der Attributinformationen der HDR-Grafikdaten durch Bezugnahme auf die Wiedergabe-Steuerinformationsdatei ermöglicht,
wobei die Wiedergabe-Steuerinformationsdatei eine Clip-Informationsdatei ist, und
wobei die Wiedergabevorrichtung eine Konfiguration hat, die das Erfassen der Attributinformationen der HDR-Grafikdaten von der Clip-Informationsdatei ermöglicht und die Steuerung von Ausgabedaten zu einer Anzeigevorrichtung gemäß den erfassten Attributinformationen ausführt, wobei die Clip-Informationsdatei eine von einer Wiedergabelistendatei angegebene Datei ist und Wiedergabepositionsinformationen in der Clip-AV-Streamdatei enthält, und die Wiedergabelistendatei eine Datei ist, die eine Wiedergabereihenfolge des Inhalts definiert und Spezifikationsinformationen von Wiedergabepositionsinformationen in der Clip-Informationsdatei enthält.

8. Informationsverarbeitungsverfahren, ausgeführt in einer Informationsverarbeitungsvorrichtung gemäß einem der Ansprüche 1 bis 6, wobei das Verfahren Folgendes umfasst:
Erfassen, durch die Datenverarbeitungseinheit, einer Wiedergabe-Steuerinformationsdatei, die auf einer Disk aufgezeichneten Wiedergabedaten entspricht, wobei die Wiedergabedaten Daten sind, die als AV-Streamdaten in einer Clip-AV-Streamdatei gespeichert sind, und
Bestimmen, durch die Datenverarbeitungseinheit, ob aus HDR-Daten gebildete Grafikdaten mit hohem Dynamikbereich (HDR) auf der Disk aufgezeichnet sind, auf der Basis von Aufzeichnungsdaten der erfassten Wiedergabe-Steuerinformationsdatei, **dadurch gekennzeichnet, dass** das Verfahren ferner Folgendes umfasst:
Erfassen, durch die Datenverarbeitungseinheit, von Attributinformationen der HDR-Grafikdaten von der Wiedergabe-Steuerinformationsdatei, und
Ausführen einer Steuerung von Ausgabedaten zu einer Anzeigevorrichtung gemäß den erfassten Attributinformationen in einem Fall, in dem bestimmt wurde, dass die HDR-Grafikdaten auf der Disk aufgezeichnet sind,
wobei die Wiedergabe-Steuerinformationsdatei eine Clip-Informationsdatei ist, wobei die Clip-Informationsdatei eine von einer Wiedergabelistendatei angegebene Datei ist und Wiedergabepositionsinformationen in der Clip-AV-Streamdatei enthält, und die Wiedergabelistendatei eine Datei ist, die eine Wiedergabereihenfolge des Inhalts definiert und Spezifikationsinformationen von Wiedergabepositionsinformationen in der Clip-Informationsdatei enthält.

9. Computerprogramm, das Anweisungen enthält, um eine Informationsverarbeitungsvorrichtung zu veranlassen, eine Informationsverarbeitung gemäß dem Informationsverarbeitungsverfahren nach Anspruch 8 auszuführen.

## Revendications

1. Appareil de traitement d'informations comprenant :
une unité de traitement de données configurée pour exécuter un traitement de lecture de données enregistrées sur un disque et stockées en tant que données de flux AV dans un fichier de flux AV de clip, l'unité de traitement de données
acquérant un fichier d'informations de commande de lecture correspondant aux données de flux AV enregistrées sur le disque, et
déterminant si des données graphiques de gamme dynamique élevée (HDR) constituées à partir de données HDR sont enregistrées sur le disque sur la base de données d'enregistrement du fichier d'informations de commande de lecture acquis,
**caractérisé en ce que**
l'unité de traitement de données acquiert en outre des informations d'attribut des données graphiques HDR et exécute la commande de données de sortie sur un dispositif d'affichage en fonction des informations d'attribut acquises dans un cas où il a été déterminé que les données graphiques HDR sont enregistrées sur le disque,
les informations d'attribut des données graphiques HDR étant acquises à partir du fichier d'informations de commande de lecture,
le fichier d'informations de commande de lecture étant un fichier d'informations de clip, le fichier d'informations de clip étant un fichier spécifié par un fichier de liste de lecture, et comprenant des informations de position de lecture dans le fichier de flux AV de clip, et le fichier de liste de lecture étant un fichier qui définit un ordre de lecture de contenu, et comprenant des informations de spécification d'informations de position de lecture, dans le fichier d'informations de clip.

2. Appareil de traitement d'informations selon la revendication 1,
les données graphiques HDR étant des données de sous-titres ou des données d'affichage d'écran de menu constituées à partir des données HDR.

3. Appareil de traitement d'informations selon la revendication 1,
l'unité de traitement de données acquérant les informations d'attribut des données graphiques HDR à partir d'un champ d'enregistrement de données d'extension dans le fichier d'informations de clip, et exécutant la commande de données de sortie sur un dispositif d'affichage en fonction des informations d'attribut acquises.

4. Appareil de traitement d'informations selon la revendication 1,
l'unité de traitement de données acquérant les informations d'attribut des données graphiques HDR à partir d'informations de programme compatibles avec des données graphiques HDR enregistrées dans le champ d'enregistrement de données d'extension dans le fichier d'informations de clip, et exécutant la commande de données de sortie sur un dispositif d'affichage en fonction des informations d'attribut acquises.

5. Appareil de traitement d'informations selon la revendication 1,
l'unité de traitement de données acquérant les informations d'attribut des données graphiques HDR à partir d'un champ d'enregistrement d'informations de programme dans le fichier d'informations de clip, et exécutant la commande de données de sortie sur un dispositif d'affichage en fonction des informations d'attribut acquises.

6. Appareil de traitement d'informations comprenant :
une unité de traitement de données configurée pour exécuter un traitement de génération de données d'enregistrement sur un support, les données d'enregistrement comprenant des données stockées en tant que données de flux AV dans un fichier de flux AV de clip,
l'unité de traitement de données générant, en tant que fichier d'informations de commande de lecture correspondant aux données de flux AV, des données d'identification indiquant si des données graphiques HDR constituées à partir de données de gamme dynamique élevée (HDR) sont enregistrées en tant que données à commander sur la base du fichier d'informations de commande de lecture, et
un fichier d'informations de commande de lecture, **caractérisé en ce que** dans le fichier d'informations de commande de lecture, des informations d'attribut des données graphiques HDR sont enregistrées dans un cas où les données graphiques HDR sont comprises en tant que données à commander sur la base du fichier d'informations de commande de lecture,
le fichier d'informations de commande de lecture étant un fichier d'informations de clip, le fichier d'informations de clip étant un fichier spécifié par un fichier de liste de lecture, et comprenant des informations de position de lecture dans le fichier de flux AV de clip, et le fichier de liste de lecture étant un fichier qui définit un ordre de lecture de contenu, et comprenant des informations de spécification des informations de position de lecture, dans le fichier d'informations de clip.

7. Système comprenant un dispositif de lecture qui lit des données de lecture et un support d'enregistrement d'informations sur lequel sont enregistrés un fichier de stockage de données de lecture et un fichier d'informations de commande de lecture correspondant au fichier de stockage de données de lecture, les données de lecture étant des données stockées en tant que données de flux AV dans un fichier de flux AV de clip,
le fichier d'informations de commande de lecture comprenant
des données d'identification indiquant si des données graphiques de gamme dynamique élevée (HDR) constituées à partir de données HDR sont enregistrées en tant que données à commander sur la base du fichier d'informations de commande de lecture, et
les informations d'attribut des données graphiques HDR dans un cas où les données graphiques HDR sont comprises en tant que données à commander sur la base du fichier d'informations de commande de lecture, en tant que données d'enregistrement,
**caractérisé en ce que** les données de lecture ont une configuration qui permet l'acquisition des informations d'attribut des données graphiques HDR par référence au fichier d'informations de commande de lecture,
le fichier d'informations de commande de lecture étant un fichier d'informations de clip, et
le dispositif de lecture ayant une configuration qui permet l'acquisition des informations d'attribut des données graphiques HDR à partir du fichier d'informations de clip, et exécutant la commande des données de sortie sur un dispositif d'affichage en fonction des informations d'attribut acquises, le fichier d'informations de clip étant un fichier spécifié par un fichier de liste de lecture, et comprenant des informations de position de lecture dans le fichier de flux AV de clip, et le fichier de liste de lecture étant un fichier qui définit un ordre de lecture de contenu, et comprenant des informations de spécification d'informations de position de lecture, dans le fichier d'informations de clip.

8. Procédé de traitement d'informations exécuté dans un appareil de traitement d'informations selon l'une quelconque des revendications 1 à 6, le procédé comprenant :
l'acquisition, par l'unité de traitement de données, d'un fichier d'informations de commande de lecture correspondant à des données de lecture enregistrées sur un disque, les données de lecture étant des données stockées en tant que données de flux AV dans un fichier de flux AV de clip, et
la détermination, par l'unité de traitement de données, du fait que des données graphiques de gamme dynamique élevée (HDR) constituées à partir de données HDR sont enregistrées sur le disque sur la base de données d'enregistrement du fichier d'informations de commande de lecture acquis, **caractérisé en ce que** le procédé comprend en outre
l'acquisition, par l'unité de traitement de données, d'informations d'attribut des données graphiques HDR à partir du fichier d'informations de commande de lecture et l'exécution d'une commande de données de sortie sur un dispositif d'affichage en fonction des informations d'attribut acquises dans un cas où il a été déterminé que les données graphiques HDR sont enregistrées sur le disque,
le fichier d'informations de commande de lecture étant un fichier d'informations de clip, le fichier d'informations de clip étant un fichier spécifié par un fichier de liste de lecture, et comprenant des informations de position de lecture dans le fichier de flux AV de clip, et le fichier de liste de lecture étant un fichier qui définit un ordre de lecture de contenu, et comprenant des informations de spécification d'informations de position de lecture, dans le fichier d'informations de clip.

9. Programme informatique comprenant des instructions pour amener un appareil de traitement d'informations à exécuter un traitement d'informations en fonction du procédé de traitement d'informations selon la revendication 8.
